# EUROPEAN PATENT APPLICATION

(11) **EP 4 832 227 A1**
(43) Date of publication of application: **28.10.2026**
(21) Application number: 24938221.9
(22) Date of filing: 14.05.2024
(51) Int. Cl.: H01M 50/474, H01M 50/477, H01M 50/30

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: WU, Guangjin, Ningde, Fujian 352100 (CN); MA, Ruoyan, Ningde, Fujian 352100 (CN); GUO, Zhijun, Ningde, Fujian 352100 (CN); XIE, Chengbin, Ningde, Fujian 352100 (CN); SHI, Shengyun, Ningde, Fujian 352100 (CN); YE, Guoqing, Ningde, Fujian 352100 (CN)
(74) Representative: Aera A/S
(86) International application number: PCT/CN2024/093189
(87) International publication number: WO 2025/236187

(57) **Abstract**

A battery cell (10), a battery, and an electrical device. The battery cell (10) comprises a casing (1), an electrode assembly (2), a separation member (4), and a pressure relief mechanism (131). The casing (1) is provided with a first wall part (13), the pressure relief mechanism (131) is disposed on the first wall part (13), the electrode assembly (2) is accommodated in the casing (1), and the electrode assembly (2) and the first wall part (13) are oppositely arranged in a first direction (Z). The separation member (4) is arranged between the first wall part (13) and the electrode assembly (2), the separation member (4) is provided with a clearance space (41), the projection of the pressure relief mechanism (131) is at least partially located in the clearance space (41) in the first direction (Z), and the clearance space (41) is configured to provide clearance for the pressure relief mechanism (131). By means of providing the separation member (4) between the first wall part (13) and the electrode assembly (2), the distance between the electrode assembly (2) and the first wall part (13) is increased. Since the separation member (4) is provided with the clearance space (41), the clearance space (41) can provide clearance for the pressure relief mechanism (131), thereby reducing the risk of the pressure relief mechanism (131) being damaged due to the separation member (4) directly impacting the pressure relief mechanism (131) when the electrode assembly (2) expands and deforms or the first wall part (13) is deformed by an external force, thereby effectively prolonging the service life of the battery cell (10).

## Description

### TECHNICAL FIELD

The present application relates to the technical field of batteries, and in particular, to a battery cell, a battery, and an electrical device.

### BACKGROUND

In recent years, new energy vehicles have made significant advancements. In the field of electric vehicles, power batteries, as the sources of power for electric vehicles, play an irreplaceable important role. With the vigorous promotion of new energy vehicles, the demand for power battery products is also increasing day by day. With the increasing demand for batteries, higher requirements are put forward for the reliability of battery bells.

In battery technology, it is necessary to ensure the reliability as well as the service lives of the battery cells. Therefore how to prolong the service life of battery cell is a problem to be solved urgently in battery technology.

### SUMMARY OF THE INVENTION

Embodiments of the present application provide a battery cell, a battery, and an electrical device, aiming to effectively prolong the service life of the battery cell.

In a first aspect, the embodiments of the present application provides a battery cell, which includes a shell, a pressure relief mechanism, an electrode assembly, and a spacer; the shell is provided with a first wall portion, the pressure relief mechanism is arranged on the first wall portion and is configured to be at least partially opened when the battery cell is subjected to pressure relief; the electrode assembly is accommodated in the shell, and the electrode assembly and the first wall portion are oppositely arranged in a first direction; the spacer is arranged between the first wall portion and the electrode assembly; the spacer is provided with an avoidance space, a projection of the pressure relief mechanism is at least partially located in the avoidance space in the first direction; and the avoidance space is configured to avoid the pressure relief mechanism.

In the above technical solution, by means of providing the spacer between the first wall portion and the electrode assembly, the distance from the electrode assembly to the first wall portion is increased, thereby reducing the risk of the pressure relief mechanism being damaged by direct impacting from the electrode assembly when the electrode assembly swells and deforms or the first wall portion is deformed by an external force; moreover, since the spacer is provided with the avoidance space, the avoidance space can avoid the pressure relief mechanism, thereby reducing the risk of the pressure relief mechanism being damaged by direct impacting from the spacer when the electrode assembly swells and deforms or the first wall portion is deformed by the external force, further effectively prolonging the service life of the battery cell.

In some embodiments, the avoidance space is a through hole that penetrates through two ends of the spacer in the first direction. The avoidance space can be used as an exhaust passage, such that emissions at the side of the spacer facing the electrode assembly in the battery cell can flow to the pressure relief mechanism through the avoidance space.

In some embodiments, the projection of the spacer does not overlap with the projection of the pressure relief mechanism in the first direction. Therefore, the influence of the spacer on the pressure relief mechanism is further reduced, and the risk of the pressure relief mechanism being damaged by direct impacting from the spacer when the electrode assembly swells and deforms or the first wall portion is deformed by the external force is further reduced.

In some embodiments, the pressure relief mechanism includes a weak portion which is configured to be at least partially cracked when the battery cell is subjected to pressure relief, and the projection of the weak portion is completely located in the avoidance space in the first direction. If the battery cell is subjected to pressure relief, the pressure relief mechanism can be cracked at the weak portion, such that the pressure relief mechanism is at least partially opened to relieve the pressure from the battery cell. The projection of the weak portion is located in the avoidance space, thus the influence of the spacer on the weak portion can be effectively reduced, and the risk that the weak portion is cracked in advance due to impact is reduced.

In some embodiments, the shell includes a side wall which is arranged around the first wall portion, and the first wall portion is arranged at an end of the side wall in the first direction; a first tab is formed at the end of the electrode assembly close to the first wall portion in the first direction; a first flow guide channel is formed between the first tab and the side wall; the spacer directly or indirectly abuts against the first tab in the first direction; and the spacer is provided with a second flow guide channel which communicates the first flow guide channel with the avoidance space. If the battery cell is subjected to thermal runaway, and after the emissions on the side of the electrode assembly flow to the first flow guide channel, the emissions can enter the avoidance space through the second flow guide channel on the spacer and can quickly reach the vicinity of the pressure relief mechanism, thus the pressure relief mechanism can be opened timely to relieve pressure, the risks of explosion and fire of the battery cell are reduced, and the reliability of the battery cell can be effectively improved.

In some embodiments, the first tab is formed at the end of the electrode assembly close to the first wall portion in the first direction; the spacer includes a ring body and a plurality of protrusions; in the first direction, the ring body is provided with a first surface and a second surface which are opposite to each other, and the avoidance space penetrates through the first surface and the second surface; the plurality of protrusions are arranged at intervals on the ring body in the circumferential direction of the ring body; at least portion of each protrusion protrudes from the first surface; a second flow guide channel is formed between parts of every two adjacent protrusions protruding from the first surface, and the second flow guide channel communicates with the avoidance space; and in the first direction, one of the ring body and the protrusions directly or indirectly abuts against the first tab, while the first wall portion directly or indirectly abuts against the other one of the ring body and the protrusions. One of the ring body and the protrusions directly or indirectly abuts against the first tab, while and the first wall portion directly or indirectly abuts against the other one of the ring body and the protrusions, such that an intermediate member is supported between the first tab and the first wall portion, and the intermediate member is capable of limiting the electrode assembly to move towards the first wall portion, thereby reducing the risk that the electrode assembly moves in the shell in the first direction. The second flow guide channel between every two adjacent protrusions communicates with the avoidance space of the spacer, so that if the battery cell is subjected to thermal runaway, the emissions on the side of the electrode assembly can enter the avoidance space through the second flow guide channel between every two adjacent protrusions and quickly reach the vicinity of a pressure relief mechanism, and the pressure relief mechanism can be opened timely to relieve pressure relief, thereby reducing the risk of explosion and fire of the battery cell, and effectively improving the reliability of the battery cell. That is, the second flow guide channel and the avoidance space can form an emission passing channel between the electrode assembly and the first wall portion, such that the emissions on the side of the electrode assembly can quickly flow to the pressure relief mechanism.

In some embodiments, the battery cell includes a first current collecting member which is arranged between the spacer and the first tab in the first direction, the first current collecting member electrically connects the spacer with the first tab, and the first wall portion is electrically connected to the spacer; and in the first direction, the protrusions directly abut against the first current collecting member, the first current collecting member directly abuts against the first tab, and the first wall portion directly abuts against the ring body. The first current collecting member is arranged between the spacer and the first tab, which realizes electrical connection between the first tab and the spacer, thereby reducing the difficulty of electrical connection between the first tab and the spacer. The protrusions directly abut against the first current collecting member, and the first wall portion directly abuts against the ring body, so that the second current guide channel is formed in the side of the spacer facing the electrode assembly, and the emissions on the side of the electrode assembly can enter the second current guide channel more quickly when the battery cell is subjected to thermal runaway.

In some embodiments, the ring body and the first wall portion are welded to form a first weld mark area, at least one protrusion and the first current collecting member are welded to form a second weld mark area, and the projection of the first weld mark area does not overlap with the projection of the second weld mark area in the first direction. Therefore, mutual interference between the first weld mark area and the second weld mark area can be reduced, and the risk of dry joint in welding of the ring body and the first wall portion or in the welding of the protrusion and the first current collecting member can be reduced.

In some embodiments, the protrusions include first portions, and the first portions include first bending portions and first connecting portions; the first bending portions are connected to an outer circumferential surface of the ring body, and the first connecting portions are connected to the first bending portions and are at least partially located on the side of the first surface deviating from the second surface. The first portions of such structure are structures connected to the outer circumferential surface of the ring body and partially bent on the side of the first surface away from the second surface; the first portions are simple in structure, such that the difficulty in forming the protrusions is reduced. In addition, because the first bending portions are connected to the outer circumferential surface of the ring body and do not occupy space in the ring body, the avoidance space can be increased, thus improving the avoidance capacity of the avoidance space for the pressure relief mechanism as well as improving the flow guide capacity of the avoidance space to flowing of the emissions.

In some embodiments, in the first direction, the first connecting portions and the first surface are arranged at an interval. First gaps can be formed between the first connecting portions and the first surface, thus the spacer can perform buffering between the first wall portion and the electrode assembly to absorb the impact force on the first wall portion, and the risk of the electrode assembly being damaged by the first wall portion at external impact is reduced. In addition, the first gaps can be formed between the first connecting portions and the first surface to communicate every two adjacent second flow guide channels; if the emissions on the side of the electrode assembly flow to one second flow guide channel in a centralized mode, the emissions can flow to the other adjacent second flow guide channel through the first gaps, and therefore the emissions can enter the avoidance space more quickly.

In some embodiments, the first connecting portions include second bending portions and a plurality of first lamination portions, and the plurality of first lamination portions are located on the side of the first surface deviating from the second surface and arranged in the first direction; and the second bending portions are connected to every two adjacent first lamination portions. By means of such structure, heights of the protrusions protruding from the first surface can be increased, thereby increasing the sizes of the second flow guide channel in the first direction and improving the smoothness of the flow of emissions in the second flow guide channel.

In some embodiments, in the first direction, every two adjacent first lamination portions are arranged at an interval. A second gap can be formed between the every two adjacent first lamination portions, such that the first connecting portions can perform buffering between the first wall portion and the electrode assembly to absorb the impact force on the first wall portion, thereby reducing the risk of the electrode assembly being damaged by the first wall portion in external impact. In addition, the second gap formed between the every two adjacent first lamination portions can communicate the every two adjacent second flow guide channels, and if the emissions on the side of the electrode assembly flow to one second flow guide channel in a centralized mode, the emissions can flow to the other adjacent second flow guide channel through the second gap, and therefore, the emissions can enter the avoidance space more quickly.

In some embodiments, the first lamination portion farthest away from the first surface is connected to the corresponding first bending portion in the first direction; or, the first lamination portion closest to the first surface is connected to the corresponding first bending portion in the first direction.

In some embodiments, the first portions are integrally bent and formed from a plate. In such structure, the first portions are high in structural stability and low in forming difficulty.

In some embodiments, the protrusions include second portions, and the second portions include third bending portions and second connecting portions; the third bending portions are connected to an inner circumferential surface of the ring body, the second connecting portions are connected to the third bending portions, the second connecting portions are at least partially located on the side of the first surface deviating from the second surface, and the second connecting portions and the first connecting portions are arranged in the first direction; the first connecting portions are closer to the first surface in the first direction than the second connecting portions; or, the second connecting portions are closer to the first surface in the first direction than the first connecting portions. The second connecting portions of the second portions and the first connecting portions of the first portions are arranged in the first direction, which can increase the heights of the protrusions protruding from the first surface, thereby increasing then the sizes of the second flow guide channel in the first direction, and improving the flowing smoothness of emissions in the second flow guide channel.

In some embodiments, the protrusions include the second portions, the second portions include the third bending portions and the second connecting portions, the third bending portions are connected to the inner circumferential surface of the ring body, the second connecting portions are connected to the third bending portions, and the second connecting portions are at least partially located on the side of the first surface deviating from the second surface. The second portions of such structure are connected to the inner circumferential surface of the ring body and are partially bent on the side of the first surface deviating from the second surface, and the second portions are simple in structure, so that the forming difficulty of the protrusion is reduced. In addition, because the third bending portions are connected to the inner circumferential surface of the ring body, the sizes of the third bending portions in the circumferential direction of the ring body can be decreased, and the material consumption of the third bending portions can be reduced.

In some embodiments, in the first direction, the second connecting portions and the first surface are arranged at an interval. Third gaps can be formed between the second connecting portions and the first surface, thus the spacer can perform buffering between the first wall portion and the electrode assembly to absorb the impact force on the first wall portion, and the risk of the electrode assembly being damaged by the first wall portion at external impact is reduced. In addition, the third gaps can be formed between the second connecting portions and the first surface to communicate every two adjacent second flow guide channels can be connected; if the emissions on the side of the electrode assembly flow to one second flow guide channel in a centralized mode, the emissions can flow to the other adjacent second flow guide channel through the third gaps, and therefore the emissions can enter the avoidance space more quickly.

In some embodiments, the second connecting portions include fourth bending portions and a plurality of second lamination parts, and the plurality of second lamination parts are located at the side of the first surface deviating from the second surface and are arranged in the first direction; and the fourth bending portions are connected to two adjacent second lamination parts. By means of such structure, heights of the protrusions protruding from the first surface can be increased, thereby increasing the sizes of the second flow guide channel in the first direction and improving the smoothness of the flow of emissions in the second flow guide channel.

In some embodiments, in the first direction, the every two adjacent second lamination portions are arranged at an interval. Fourth gaps can be formed between the every two adjacent second lamination portions, thus the second connecting portions can perform buffering between the first wall portion and the electrode assembly to absorb the impact force on the first wall portion, and the risk of the electrode assembly being damaged by the first wall portion at external impact is reduced. In addition, the fourth gaps formed between the every two adjacent second lamination portions can communicate every two adjacent second flow guide channels; if the emissions on the side of the electrode assembly flow to one second flow guide channel in a centralized mode, the emissions can flow to the other adjacent second flow guide channel through the fourth gaps, and therefore the emissions can enter the avoidance space more quickly.

In some embodiments, the second lamination portion farthest away from the first surface is connected to the corresponding third bending portion in the first direction; or, the second lamination portion closest to the first surface is connected to the corresponding third bending portion in the first direction.

In some embodiments, the second portions are integrally bent and formed from a plate. In such structure, the second portions are high in structural stability and low in forming difficulty.

In some embodiments, in the first direction, the minimum thickness of the ring body is D, and D≥0.3mm. The ring body has enough thickness, so that on one hand, the ring body has enough structural strength, and on the other hand, an enough distance is formed from the electrode assembly to the first wall portion, thereby reducing the risk of the pressure relief mechanism being damaged by direct impacting from electrode assembly when the electrode assembly swells and deforms or the first wall portion is deformed by the external force.

In some embodiments, the spacer is electrically connected to the first wall portion and the first tab; and in the circumferential direction of the ring body, the sum of the maximum sizes of all protrusions is A₁, the sum of the maximum sizes of all second flow guide channels is A₂, 0.1≤A₁/(A₁+ A₂)≤0.8. A₁/(A₁+ A₂)≥0.1, so the size ratio of all protrusions in the circumferential direction of the ring body is not too small, and the whole protrusions and components directly abutting against the protrusions have enough contact area to realize stable current conduction; A₁/(A₁+ A₂)≤0.8, so the size ratio of all second flow guide channels in the circumferential direction of the ring body is not too small, the emissions on the side of the electrode assembly can quickly enter the avoidance space, and the pressure relief mechanism can be opened more timely to relieve pressure.

In some embodiments, the spacer electrically connects the first wall portion with the electrode assembly. The spacer not only plays a role in separating the first wall portion from the electrode assembly, but also plays a role in electrically connecting the first wall portion with the electrode assembly.

In some embodiments, the battery cell includes the first current collecting member, the first current collecting member is arranged between the spacer and the electrode assembly in the first direction and is electrically connected to the spacer and the electrode assembly, and the projection of the first current collecting member covers the avoidance space in the first direction. The first current collecting member between the spacer and the electrode assembly realizes the electric connection between the electrode assembly and the spacer, thus reducing the difficulty in electric connection between the electrode assembly and the spacer.

In some embodiments, the spacer and the first wall portion are welded to form the first weld mark area, the spacer and the first current collecting member are welded to form the second weld mark area, and the projection of the first weld mark area does not overlap with the projection of the second weld mark area in the first direction. Therefore, the mutual interference between the first weld mark area and the second weld mark area can be reduced, and the risk of dry joint in welding of the spacer and the first wall portion or in the welding of the spacer and the first current collecting member can be reduced.

In some embodiments, the first tab is formed at the end of the electrode assembly close to the first wall portion in the first direction, and the material of the first tab is different from that of the first wall portion; the material of the first current collecting member is the same as that of the first tab, and the first current collecting member is connected to the first tab by welding; the material of the spacer is the same as that of the first wall portion, and the spacer is connected to the first wall portion by welding; and the first current collecting member is in composite connection with the spacer. The material of the first current collecting member is the same as that of the first tab, so that the difficulty in welding the first current collecting member and the first tab can be reduced, the firmness of the first current collecting member and the first tab after welding can be improved, and stable current conduction between the first current collecting member and the first tab is realized; the material of the spacer is the same as that of the first wall portion, thus the difficulty welding of the spacer and the first wall portion can be reduced, the firmness of the spacer and the first wall portion after welding can be improved, and stable current conduction between the spacer and the first wall portion is realized; and the first current collecting member is in composite connection with the spacer, so that stable current conduction between the first current collecting member and the spacer can be realized, and stable current conduction between the first wall portion and the first tab is further realized.

In some embodiments, the electrode assembly is provided with a first central hole, the first current collecting member is provided with a second central hole, and the second central hole communicates the first central hole with avoidance space. If the battery cell is subjected to thermal runaway, the emissions generated by the electrode assembly can enter the avoidance space through the first central hole and the second central hole in sequence, and then the pressure relief mechanism can be opened more timely to relieve pressure.

In some embodiments, the first wall portion includes a wall body and an abutting portion, the wall body is provided with the pressure relief mechanism, and the abutting portion is arranged around an outer edge of the wall body; in the first direction, the abutting portion protrudes from the wall body in a direction close to the electrode assembly and directly or indirectly abuts against the spacer. In this way, the distance from the pressure relief mechanism to the spacer can be increased, thus further reducing the influence of the spacer on the pressure relief mechanism, and further reducing the risk of the pressure relief mechanism being damaged by direct impacting from the spacer when the electrode assembly swells and deforms or the first wall portion is deformed by the external force, further effectively prolonging the service life of the battery cell.

In some embodiments, the shell includes a side wall which is separated from the first wall portion, the side wall is arranged around the first wall portion, and the first wall portion is arranged at an end of the side wall in the first direction; and at least portion of the abutting portion is accommodated in the side wall and is in positioning fit with the side wall. The first wall portion is separated from the side wall, such that the electrode assembly can be conveniently mounted in the shell. The abutting portion and the side wall are in positioning fit, so that the difficulty in assembly of the first wall portion and the side wall can be effectively relieved.

In some embodiments, the pressure relief mechanism and the first wall portion are integrally formed; or, the pressure relief mechanism and the first wall portion are arranged in a separated mode, and the pressure relief mechanism is mounted on the first wall portion. The pressure relief mechanism and the first wall portion are integrally formed to form an integrated pressure relief mechanism, so that the reliability of the pressure relief mechanism is improved, the process of mounting of the pressure relief mechanism is omitted, and the economic efficiency is improved. The pressure relief mechanism and the first wall portion are arranged in a separated mode, and the pressure relief mechanism is mounted on the first wall portion, therefore, the pressure relief mechanism is a component independent of the shell, the pressure relief mechanism and the shell can be independently assembled and produced, the production difficulty is low, and the efficiency is high.

In some embodiments, the shell includes a case and end covers; an opening is formed in at least one end of the case in the first direction; the end covers seal the opening; and at least one end cover serves as the first wall portion. The at least one end cover serves as the first wall portion, so that the at least one end cover is provided with the pressure relief mechanism, and the forming difficulty or the mounting difficulty of the pressure relief mechanism can be reduced.

In some embodiments, the battery cell is a cylindrical battery cell.

In a second aspect, an embodiment of the present application provides a battery, which includes the battery cell provided by any embodiment in the first aspect.

In a third aspect, the embodiments of the present application provide an electrical device, including the battery cell provided in any embodiment of the first aspect. The battery cell is configured to supply electric energy to the electric device.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle according to some embodiments of the present application;
FIG. 2 is an exploded view of a battery provided in some embodiments of the present application;
FIG. 3 is an exploded view of a battery cell provided by some embodiments of the present application;
FIG. 4 is a cross-sectional view of a battery cell in FIG. 3;
FIG. 5 is a partially enlarged view of a battery cell in FIG. 4;
FIG. 6 is a partial view of a battery cell provided by some other embodiments of the present application;
FIG. 7 is an exploded view of a battery cell provided by yet some other embodiments of the present application;
FIG. 8 is a cross-sectional view of a battery cell in FIG. 7;
FIG. 9 is a partially enlarged view of a battery cell in FIG. 8;
FIG. 10 is an isometric view of a spacer in FIG. 9;
FIG. 11 is a cross-sectional view of a spacer in FIG. 10;
FIG. 12 is a view in a direction A of a spacer in FIG. 11;
FIG. 13 is a partial view of a battery cell provided by some embodiments of the present application (protrusions include first portions that are connected to an outer circumferential surface of a ring body);
FIG. 14 is an isometric view of a spacer in FIG. 13;
FIG. 15 is a partial view of a battery cell provided by some other embodiments of the present application (protrusions include first portions that are connected to an outer circumferential surface of a ring body);
FIG. 16 is an isometric view of a spacer in FIG. 15;
FIG. 17 is a partial view of a battery cell provided by some embodiments of the present application (protrusions include first portions and second portions, the first portions are connected to an outer circumferential surface of a ring body, and the second portions are connected to an inner circumferential surface of the ring body);
FIG. 18 is an isometric view of a spacer in FIG. 17;
FIG. 19 is a partial view of a battery cell provided by some other embodiments of the present application (protrusions include first portions and second portions, the first portions are connected to an outer circumferential surface of a ring body, and the second portions are connected to an inner circumferential surface of the ring body);
FIG. 20 is an isometric view of a spacer in FIG. 19;
FIG. 21 is a partial view of a battery cell provided by some embodiments of the present application (first portions are connected to an inner circumferential surface of a ring body);
FIG. 22 is an isometric view of a spacer in FIG. 21;
FIG. 23 is a partial view of a battery cell provided by some other embodiments of the present application (protrusions include second portions that are connected to an inner circumferential surface of a ring body);
FIG. 24 is an isometric view of a spacer in FIG. 23;
FIG. 25 is a partial view of a battery cell provided by yet some other embodiments of the present application (protrusions include second portions that are connected to an inner circumferential surface of a ring body);
FIG. 26 is an isometric view of a spacer in FIG. 25;
FIG. 27 is a schematic structural diagram of a first wall portion provided by some embodiments of the present application; and
FIG. 28 is a cross-sectional view of a first wall portion in FIG. 27.

Reference numerals: 1-shell; 11-case; 12-end cover; 13-first wall portion; 131-pressure relief mechanism; 1311-weak portion; 1312-pressure relief area; 132-wall body; 1321-third surface; 133-abutting portion; 134-flow guide space; 135-edge portion; 136-pressure relief groove; 137-groove; 138-bottom wall of groove; 1381-concave portion; 1382-reinforcing rib; 14-side wall; 141-inner circumferential surface of side wall; 2-electrode assembly; 21-main body portion; 22-first tab; 23-second tab; 24-first central hole; 3-electrode terminal; 4-spacer; 41-avoidance space; 42-second flow guide channel; 43-ring body; 431-first surface; 432-second surface; 433-outer circumferential surface of ring body; 434-inner circumferential surface of ring body; 44-protrusion; 441-first portion; 4411-first bending portion; 4412-first connecting portion; 44121-second bending portion; 44122-first lamination portion; 4413-first gap; 4414-second gap; 442-second portion; 4421-third bending portion; 4422-second connecting portion; 44221-fourth bending portion; 44222-second lamination portion; 4423-third gap; 4424-fourth gap; 45-first weld mark area; 46-second weld mark area; 5-first current collecting member; 51-second central hole; 6-second current collecting member; 7-first flow guide channel; 10-battery cell; 20-box; 201-first box body; 202-second box body; 100-battery; 200-controller; 300-motor; 1000-vehicle; Z-first direction; and X-circumferential direction of ring body.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like.

The battery cell generally includes an electrode assembly. The electrode assembly includes a positive electrode, a negative electrode and a spacer. During charge-discharge of the battery cell, active ions (e.g., lithium ions) are intercalated and de-intercalated back and forth between the positive electrode and the negative electrode. The spacer is arranged between the positive electrode and the negative electrode, so that the risk of short circuit of the positive electrode and the negative electrode can be reduced, and moreover, the active ions can pass.

In some embodiments, the positive electrode can be a positive electrode plate, and the positive electrode plate may include a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material layer is provided on either or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene glycol terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, it is not limited to these materials in the present application, other traditional materials which can be used as the positive electrode active material of the battery can also be adopted. These positive electrode active materials can be independently used, or more than two are combined to use. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, the positive electrode may adopt metal foam. The metal foam can be nickel foam, copper foam, aluminum foam, alloy foam, etc. When the metal foam is treated as the positive electrode, the positive electrode active material may be not arranged on a surface of the metal foam, and the positive electrode active material may also be arranged. As an example, a lithium source material, potassium metal or sodium metal may also be filled or/and deposited in the metal foam, and the lithium source material is lithium metal and/or a lithium-rich material.

In some embodiments, the negative electrode may be a negative electrode plate, and the negative electrode plate may include a negative electrode current collector.

As an example, the negative electrode current collector may adopt a metal foil, metal foam or a composite current collector. For example, as the metal foil, silver surface-treated aluminum or stainless steel, stainless steel, copper, aluminum, nickel, baked carbon, carbon, nickel, titanium, or the like can be used. The foam metal may be nickel foam, copper foam, aluminum foam, alloy foam, etc. The composite current collector may include a high molecular material substrate and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene glycol terephthalate, polybutylene terephthalate, polystyrene, polyethylene, etc.).

For example, the negative electrode plate may include a negative electrode current collector and a negative electrode active material provided on at least one surface of the negative electrode current collector.

As an example, the negative electrode current collector has two opposite surfaces in the thickness direction, and the negative electrode active material is arranged on any one of or both the two opposite surfaces of the negative electrode current collector.

As an example, the negative electrode active material can be a negative electrode active material which is known in the field and used for the battery cell. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the spacer is a separator. The separator can be any well-known porous separator with high chemical stability and mechanical stability.

As an example, the material of the separator may be selected from a group consisting of at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a winding structure. The positive electrode plate and the negative electrode plate are wound into the wound structure.

In some implementations, the electrode assembly is of a stacked structure.

As an example, a plurality of positive electrode plates and a plurality of negative electrode plates may be provided, and the plurality of positive electrode plates and the plurality of negative electrode plates may be alternately stacked.

As an example, a plurality of positive electrode plates can be arranged, negative electrode plates are folded to form a plurality of stacked folded segments, and one positive electrode plate is clamped between every two adjacent folded segments.

As an example, both the positive electrode plates and the negative electrode plates are folded to form a plurality of stacked folded segments.

As an example, a plurality of spacers may be provided and arranged between any adjacent positive electrode plates or negative electrode plates.

As an example, the spacers may be continuously provided between any adjacent positive electrode plates or negative electrode plates in a folding or winding mode.

In some implementations, the shape of the electrode assembly may be a cylinder, a flat shape, a polygon prism, or the like.

In some embodiments, the electrode assembly is provided with tabs that can conduct current out from the electrode assembly. Each tab includes a positive electrode tab and a negative electrode tab.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell can be a cylindrical battery cell, a prismatic battery cell, a pouch battery cell, or a battery cell in other shapes; the prismatic battery cell includes a square-case battery cell, a blade-shaped battery cell, and a polygon prism shaped battery cell, such as a hexagonal prism battery cell.

The battery mentioned in the embodiments of the present application refers to a single physical module including one or more battery cells to provide higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box and a battery cell. The battery cell or the battery module is accommodated in the box.

In some embodiments, the box may serve as a portion of a chassis structure of the vehicle. For example, a portion of the box may become at least a portion of a vehicle floor, or a portion of the box may become at least a portion of a cross beam and a longitudinal beam of a vehicle.

In some embodiments, the battery may be an energy storage apparatus. The energy storage apparatus includes an energy storage container, an energy storage electric cabinet and the like.

In some embodiments, in order to improve the reliability of the battery cell, a pressure relief mechanism can be generally arranged on a wall portion of the shell of the battery cell, and thus if the battery cell is in thermal runaway, the pressure in the battery cell can be relieved through the pressure relief mechanism.

The pressure relief mechanism refers to an element or a component which can be at least partially opened when the internal pressure of the battery cell reaches a preset threshold value so as to relieve the internal pressure. The threshold design is different according to design requirements. The threshold may depend on one or more materials of a positive electrode plate, a negative electrode plate, the electrolyte solution, and a spacer in the battery cell.

When the pressure relief mechanism is opened, high-temperature and high-pressure substances inside the battery cell will be discharged outward from the opened portion as emissions. In this way, the battery cell can be subjected to pressure relief under controlled pressure, thereby preventing the occurrence of potentially more serious accidents.

In the embodiment of the present application, the emissions from the battery cell include, but are not limited to: electrolyte solution, dissolved or split positive and negative electrode plates, fragments of the separator, high-temperature and high-pressure gases generated by reactions, flames, and the like.

In a typical battery cell, after the electrode assembly is placed inside the shell, the electrode assembly generally directly abuts against the wall of the shell that is equipped with the pressure relief mechanism; if the electrode assembly swells and deforms or the wall portion equipped with the pressure relief mechanism is deformed by an external force, the wall portion equipped with the pressure relief mechanism will be pressed against the electrode assembly, and the pressure relief mechanism is susceptible to damage and failure when impacted by the electrode assembly, which affects the service life of the battery cell.

In view of above, the embodiment of the present application provides the battery cell; the spacer is arranged between the electrode assembly and a first wall portion equipped with the pressure relief mechanism of the shell, and an avoidance space is provided on the spacer to avoid the pressure relief mechanism.

In such battery cell, by arranging the spacer between the first wall portion and the electrode assembly, the distance from the electrode assembly to the first wall portion is increased, thereby reducing the risk of the pressure relief mechanism being damaged by direct impacting from the electrode assembly when the electrode assembly swells and deforms or the first wall portion is deformed by an external force; and moreover, since the spacer is provided with the avoidance space, and the avoidance space can avoid the pressure relief mechanism, thereby reducing the risk of the pressure relief mechanism being damaged by direct impacting from the spacer when the electrode assembly swells or deforms or the first wall portion is deformed by an external force, and further effectively improving the service life of the battery cell.

The battery cell in the embodiments of the present application is suitable for a battery and an electrical device using the battery cell.

The electrical device can be vehicles, mobile phones, portable devices, laptops, ships, spacecraft, electric toys, power tools, and the like. The vehicles can be fuel vehicles, gas vehicles, or new energy vehicles. New energy vehicles can be pure electric vehicles, hybrid vehicles, or range-extended vehicles, etc.; the spacecraft include airplanes, rockets, space shuttles, and spaceships, etc.; the electric toys can include stationary or mobile electric toys, such as game consoles, electric toy cars, electric toy ships, and electric toy planes; the electric tools include metal-cutting electric tools, grinding electric tools, assembly electric tools, and electric tools for railways, such as electric drills, electric grinders, electric wrenches, electric screwdrivers, electric hammers, impact drills, concrete vibrators, and electric planers.

The following embodiment, for the sake of convenience, are illustrated with an example of the electrical device for the vehicle.

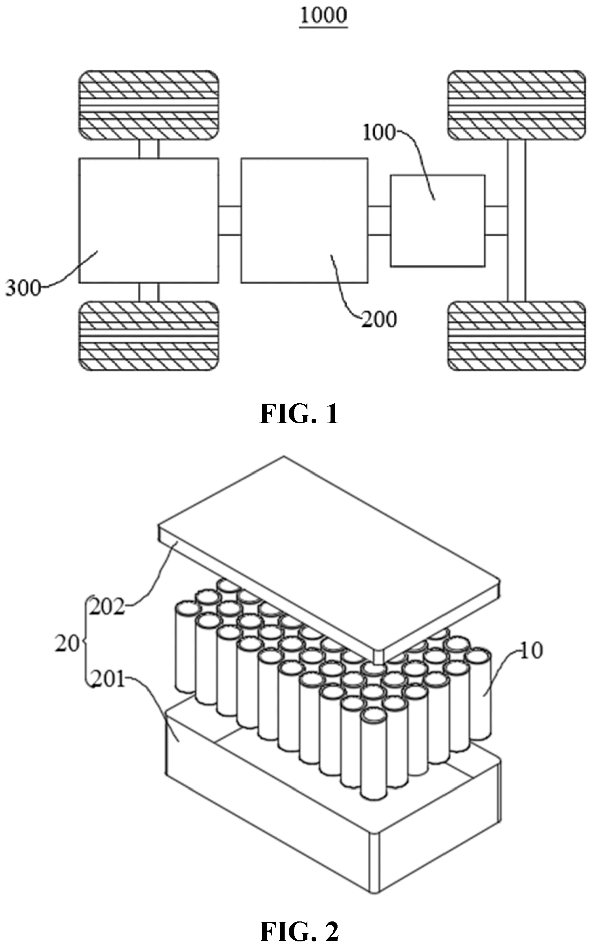

Referring to FIG. 1, FIG. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be configured to supply power to the vehicle 1000. For example, the battery 100 may be used as an operating power source of the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to FIG. 2, FIG. 2 is an exploded diagram of a battery 100 according to some embodiments of the present application. The battery 100 includes a box cell 10 and a box 20. The battery cell 10 is accommodated in the box 20.

The box 20 is a component for accommodating the battery cell 10, the box 20 provides an accommodating space for the battery cell 10, and the box 20 can be of various structures. In some embodiments, the box 20 may include a first box body 201 and a second box body 202 which are mutually covered and jointly define an accommodating space used for accommodating the battery cell 10. The first box body 201 and the second box body 202 may have a variety of shapes, such as a cuboid and a cylinder. The first box body 201 may be of a hollow structure with one side open, the second box body 202 may also be of a hollow structure with one side open, and the open side of the second box body 202 covers the open side of the first box body 201, so as to form the box 20 having the accommodating space. It is also possible that the first box body 201 may be of a hollow structure with one side open, the second portion 202 may be a plate-like structure, and the second portion 202 covers the open side of the first portion 201, so as to form the box body 20 having the enclosure space. The first box body 201 and the second box body 202 may be sealed by means of a sealing element, which may be a sealing ring, a sealant, etc.

In the battery 100, one or a plurality of battery cells 10 can be provided. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. All battery cells 10 can be directly connected in series or in parallel or in series-parallel connection, and then, a whole body formed by all the battery cells 10 is accommodated in the box 20.

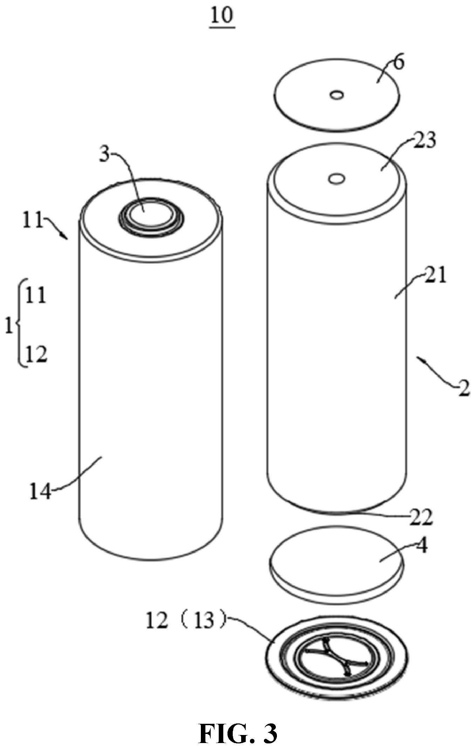

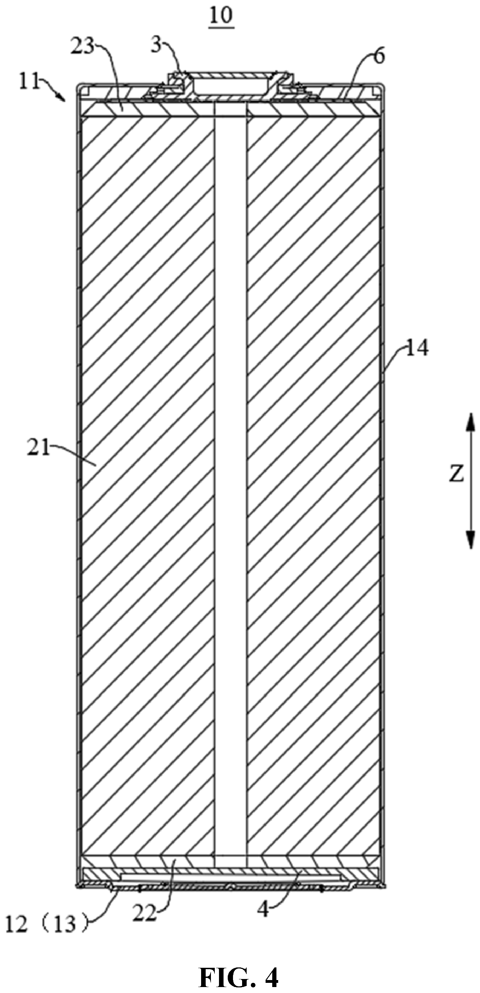

With reference to FIG. 3 and FIG. 4, FIG. 3 is an exploded view of a battery cell 10 provided by some embodiments of the present application; and FIG. 4 is a sectional view of a battery cell 10 in FIG. 3. The battery cell 10 can include a shell 1 and an electrode assembly 2, and the electrode assembly 2 is accommodated in the shell 1.

In some embodiments, the shell 1 can include a case 11 and an end cover 12, the case 11 is provided with an opening, and the end cover 12 seals the opening of the case 11.

The case 11 is a component for accommodating the electrode assembly 2, the case 11 can be of a hollow structure with an opening formed in one end, and the case 11 can be of a hollow structure with openings formed in two opposite ends. The case 11 can be in various shapes, such as a cylinder shape, and a cuboid shape. The case 11 can be made of various materials, such as copper, iron, aluminum, steel, and aluminum alloy.

The end cover 12 is a component that closes the opening of the case 11 to isolate an internal environment of the battery cell 10 from an external environment. The end cover 12 and the case 11 jointly define an accommodating space for accommodating the electrode assembly 2, an electrolyte solution and other components. The end cover 12 can be connected to the case 11 in a welding or rolling sealing manner so as to seal the opening of the case 11. The shape of the end cover 12 can be matched with the shape of the shell 1, for example, if the case 11 is of a cuboid structure, the end cover 12 will be of a rectangular plate-shaped structure matched with the shell 1, for another example, if the case 11 is of a cylinder shape, and the end cover 12 will be of a circular plate-shaped structure matched with the case 11. There can be various materials of an end cover 12, such as copper, iron, aluminum, steel, and an aluminum alloy; the material of the end cover 12 can be the same as or different from that of the case 11.

In the embodiment that an opening is formed in one end of the case 11, one end cover 12 can be correspondingly arranged. In an embodiment that the case 11 is provided with openings in two opposite ends, two end covers 12 can be correspondingly arranged, the two end covers 12 seal the two openings of the case 11 respectively, and the two end covers 12 and the case 11 jointly define the accommodating space.

In some embodiments, the battery cell 10 may further include an electrode terminal 3, and the electrode terminal 3 is arranged on the shell 1 and is electrically connected to a tab of the electrode assembly 2 so as to input or output electric energy of the battery cell 10. The electrode terminal 3 can be arranged on the case 11 of the shell 1, or arranged on the end cover 12 of the shell 1. The electrode terminal 3 can be directly connected to the electrode tab, for example, the electrode terminal 3 is welded with the tab. The electrode terminal 3 can also be indirectly connected to a tab.

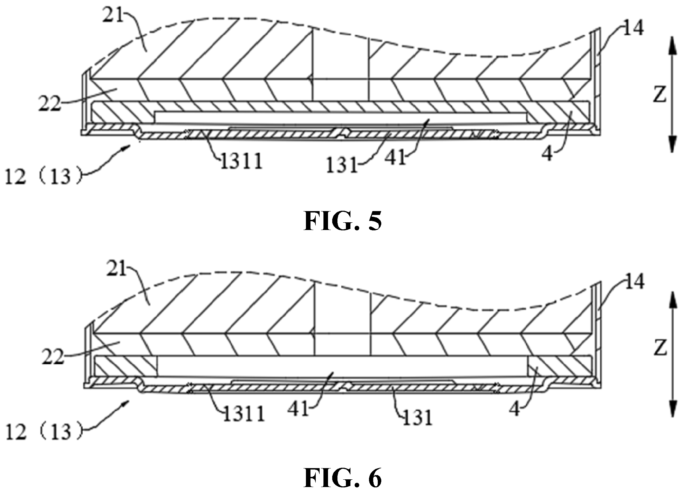

With reference to FIG. 5, FIG. 5 is a partially enlarged view of a battery cell 10 in FIG. 4. The embodiment of the present application provides the battery cell 10; and the battery cell 10 includes a shell 1, an electrode assembly 2, a spacer 4, and a pressure relief mechanism 131. The shell 1 is provided with a first wall portion 13, and the pressure relief mechanism 131 is arranged on the first wall portion 13 and is configured to be at least partially opened when the battery cell 10 is subjected to pressure relief. The electrode assembly 2 is accommodated in the shell 1, and the electrode assembly 2 and the first wall portion 13 are oppositely arranged in a first direction Z. The spacer 4 is arranged between the first wall portion 13 and the electrode assembly 2, the spacer 4 is provided with an avoidance space 41, at least portion of a projection of the pressure relief mechanism 131 is located in the avoidance space 41 in the first direction Z, and the avoidance space 41 is configured to avoid the pressure relief mechanism 131.

The shell 1 can be cylindrical, prismatic, and the like. The shell 1 can be provided with only one or more first wall portions 13. At least one end of the case 11 forms an opening in the first direction Z. In an embodiment that only one end of the case 11 forms the opening, only an end cover 12 serves as the first wall portion 13, or only the wall portion of the case 11 opposite to the end cover 12 serve as the first wall portion 13, or both the end cover 12 and the wall portion of the case 11 opposite to the end cover 12 serves as the first wall portions 13. In an embodiment that two opposite ends of the case 11 form the openings, any one of two end covers 12 serves as the first wall portion 13, or both the two end covers 12 serve as the first wall portions 13.

The first direction Z is an arrangement direction of the electrode assembly 2 and the first wall portion 13, and the first direction Z can be parallel to a thickness direction of the first wall portion 13. In an embodiment that the shell 1 is cylindrical, namely, the battery cell 10 is a cylindrical battery cell, the first direction Z can be parallel to an axial direction of the shell 1. The electrode assembly 2 can be of a winding structure or a stacked structure. If the electrode assembly 2 is of the winding structure, the first direction Z can be parallel to an extension direction of a winding center line of the electrode assembly 2.

The electrode assembly 2 can include a main body portion 21, a first tab 22, and a second tab 23; the first tab 22 and the second tab 23 are opposite in polarity; and the first tab 22 and the second tab 23 can be connected to two opposite ends of the main body portion 21 in the first direction Z, or the first tab 22 and the second tab 23 are connected to the same end of the main body portion 21 in the first direction Z. One of the first tab 22 and the second tab 23 is a positive electrode tab, and the other one is a negative electrode tab. The main body portion 21 can be a portion corresponding to an area of an electrode plate coated with an active substance layer in the electrode assembly 2, the positive electrode tab can be a portion without being coated with the active substance layer on the positive electrode plate, and the negative electrode tab can be a portion without being coated with the active substance layer on the negative electrode plate.

The spacer 4 can be an insulating member arranged between the first wall portion 13 and an electrode assembly 2 so as to insulate and isolate the electrode assembly 2 from the first wall portion 13, and the insulating member can be made of plastic, rubber, and other materials. As an example, only one end of the shell 11 forms the opening, and the end cover 12 serves as the first wall portion 13; in the first direction Z, the first tab 22 and the second tab 23 are respectively arranged at two ends of the main body portion 21; the wall portion of the shell 11 opposite to the end cover 12 is provided with the electrode terminal 3; the electrode terminal 3 is connected to the shell 11 in an insulated manner; the second tab 23 of the electrode assembly 2 is electrically connected to the electrode terminal 3; the first tab 22 of the electrode assembly 2 is electrically connected to the shell 11; and the spacer 4 is arranged between the first tab 22 and the end cover 12 and is configured to insulate and isolate the first tab 22 from the end cover 12.

The spacer 4 can also be a conductive member arranged between the first wall portion 13 and the electrode assembly 2 so as to realize electrical connection between the electrode assembly 2 and the first wall portion 13; the conductive member can be made of conductive metal such as copper, iron, aluminum, steel, and aluminum alloy. The spacer 4 can be directly or directly connected to the electrode assembly 2 to realize electrical connection between the spacer 4 and the electrode assembly 2; the spacer 4 can be directly or directly connected to the first wall portion 13 to realize electrical connection between the spacer 4 and the first wall portion 13. As an example, as shown in FIG. 4, only one end of the shell 11 forms the opening, and the end cover 12 serves as the first wall portion 13; in the first direction Z, the first tab 22 and the second tab 23 are respectively arranged at two ends of the main body portion 21; the wall portion of the shell 11 opposite to the end cover 12 is provided with the electrode terminal 3; the electrode terminal 3 is connected to the shell 11 in an insulated manner; the second tab 23 of the electrode assembly 2 is electrically connected to the electrode terminal 3 through a second current collecting member 6; and the spacer 4 is arranged between the first tab 22 of the electrode assembly 2 and the end cover 12 and is configured to electrically connect the first tab 22 with the end cover 12.

The avoidance space 41 is a space on the spacer 4 for avoiding the pressure relief mechanism 131, and the projection of the pressure relief mechanism 131 in the first direction Z can be partially or completely located in the avoidance space 41. The avoidance space 41 can be a through hole that penetrates through two opposite ends of the spacer 4 in the first direction Z, or an avoidance groove formed on the side of the spacer 4 facing the first wall portion 13. In an embodiment that the first wall portion 13 is indirectly connected to the spacer 4, for example, the first wall portion 13 and the spacer 4 are connected by an intermediate member, the intermediate member can be an annular structure, and a central hole of the intermediate member also plays a role of avoiding the pressure relief mechanism 131, so as to make projection of the pressure relief mechanism 131 in the first direction Z in the avoidance space 41.

The pressure relief mechanism 131 can be a component arranged separately from the first wall portion 13, the pressure relief mechanism 131 is mounted on the first wall portion 13, and the pressure relief mechanism 131 can be an explosion-proof sheet, a pressure relief valve, and the like; and the pressure relief mechanism 131 can also be integrally formed with the first wall portion 13.

In the embodiment of the present application, by means of providing the spacer 4 between the first wall portion 13 and the electrode assembly 2, the distance from the electrode assembly 2 to the first wall portion 13 is increased, thereby reducing the risk of the pressure relief mechanism 131 being damaged by direct impacting from the electrode assembly 2 when the electrode assembly 2 swells and deforms or the first wall portion 13 is deformed by an external force; moreover, since the spacer 4 is provided with the avoidance space 41, the avoidance space 41 can avoid the pressure relief mechanism 131, thereby reducing the risk of the pressure relief mechanism 131 being damaged by direct impacting from the spacer 4 when the electrode assembly 2 swells and deforms or the first wall portion 13 is deformed by the external force, further effectively prolonging the service life of the battery cell 10.

In some embodiments, with reference to FIG. 6, the avoidance space 41 is a through hole that penetrates through two ends of the spacer 4 in the first direction Z.

The avoidance space 41 can be the through hole that penetrates through two ends of the spacer 4 only in the first direction Z, the through hole can be a circular hole, a square hole, and the like, and the spacer 4 can be of an annular structure. The avoidance space 41 can also be a through hole that penetrates through two ends of the spacer 4 in the first direction Z and extends to the outer circumferential surface of the spacer 4 in a direction perpendicular to the first direction Z, and the spacer 4 can be of a U-shaped structure, a semi-annular structure, and the like.

In the embodiments, the avoidance space 41 penetrates through two ends of the spacer 4 in the first direction Z, and the avoidance space 41 can be used as an exhaust passage, such that emissions located on the side of the spacer 4 facing an electrode assembly 2 in the battery cell 10 can flow to the pressure relief mechanism 131 through the avoidance space 41.

In some embodiments, with reference to FIG. 6, FIG. 6 is a partial view of the battery cell 10 provided by some other embodiments of the present application. In the first direction Z, the projection of the spacer 4 does not overlap with the projection of the pressure relief mechanism 131. That is, orthographic projections of the spacer 4 and the pressure relief mechanism 131 in a plane perpendicular to the first direction Z do not overlap with each other.

The avoidance space 41 can be the through hole that penetrates through two ends of the spacer 4 in the first direction Z, such that the projection of the spacer 4 in the first direction Z does not overlap with the projection of the pressure relief mechanism 131 in the first direction Z. The spacer 4 can be of an annular structure, a U-shaped structure, a semi-annular structure, and the like. It is to be understood that the projection of the spacer 4 does not overlap with the projection of the pressure relief mechanism 131 in the first direction Z, and thus the projection of the pressure relief mechanism 131 in the first direction Z is completely located in the avoidance space 41.

In the embodiments, the projection of the spacer 4 in the first direction Z does not overlap with the projection of the pressure relief mechanism 131 in the first direction Z, thus the influence of the spacer 4 on the pressure relief mechanism 131 is further reduced, and moreover, the risk of the pressure relief mechanism 131 being damaged by direct impacting from the spacer 4 when the electrode assembly 2 swells and deforms or the first wall portion 13 is deformed by the external force is further reduced.

In some embodiments, the pressure relief mechanism 131 includes a weak portion 1311 which is configured to be at least partially cracked when the battery cell 10 is subjected to pressure relief, and the projection of the weak portion 1311 is completely located in the avoidance space 41 in the first direction Z.

It is to be understood that the projection of the weak portion 1311 does not overlap with the projection of the spacer 4 in the first direction Z.

The weak portion 1311 is a portion with strength less than other areas in the pressure relief mechanism 131, the weak portion 1311 can be formed by arranging a groove in the pressure relief mechanism 131, or the pressure relief mechanism 131 is locally subjected to thermal treatment to reduce the strength of the local area so as to correspondingly form the weak portion.

As an example, in the embodiment shown in the FIG. 6, the pressure relief mechanism 131 and the first wall portion 13 are integrally formed, the pressure relief mechanism 131 is provided with a pressure relief groove 136 (not shown in FIG. 6), the pressure relief mechanism 131 correspondingly forms the weak portion 1311 at the position of the pressure relief groove 136, and a bottom wall of the pressure relief groove 136 can serve as the weak portion 1311.

If the battery cell 10 is subjected to pressure relief, the pressure relief mechanism 131 can be cracked at the position of the weak portion 1311, and thus the pressure relief mechanism 131 can be at least partially opened to relieve the pressure in the battery cell 10. The projection of the weak portion 1311 is in the avoidance space 41, so that the influence of the spacer 4 on the weak portion 1311 can be effectively reduced, and the risk that the weak portion 1311 is cracked in advance due to impact is reduced.

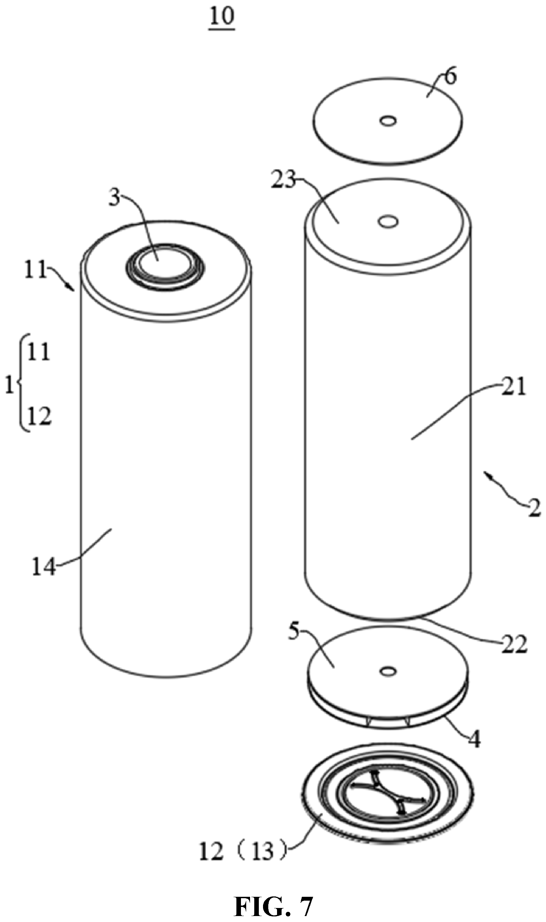

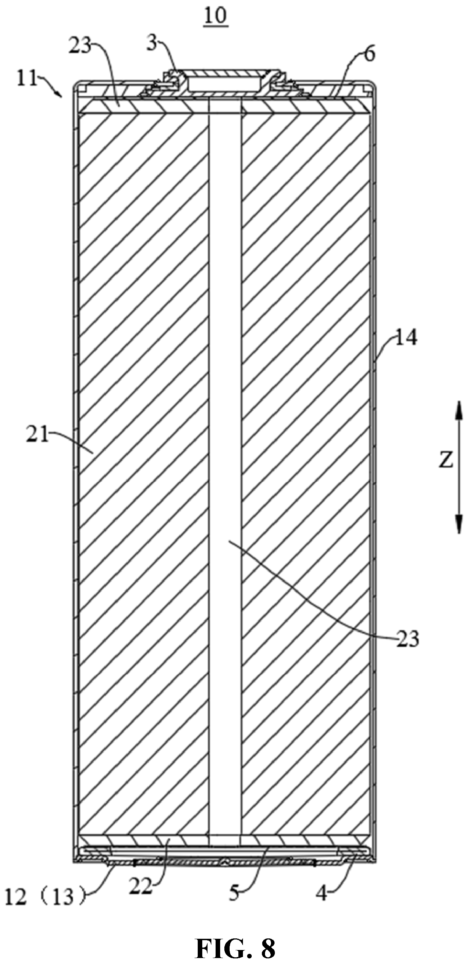

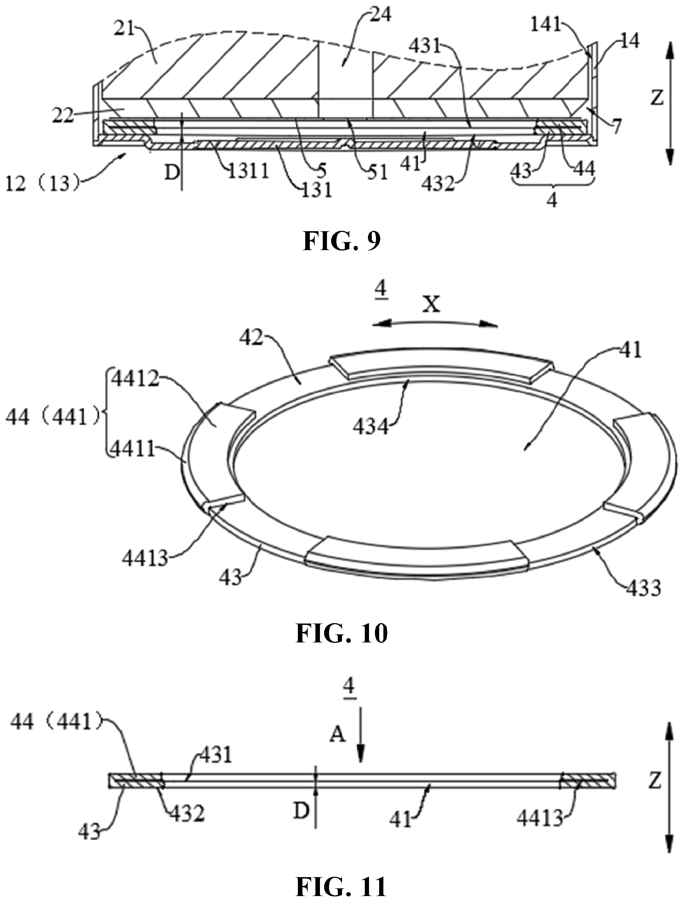

In some embodiments, with reference to FIG. 7 to FIG. 10, FIG. 7 is an exploded view of the battery cell 10 provided by yet some other embodiments of the present application (first portions 441 are connected to an outer circumferential surface 433 of a ring body); FIG. 8 is a cross-sectional view of the battery cell 10 in FIG. 7; FIG. 9 is a partially enlarged view of the battery cell 10 in FIG. 8; and FIG. 10 is an isometric view of the spacer 4 in FIG. 9. The shell 1 includes a side wall 14 which is arranged around the first wall portion 13, and the first wall portion 13 is arranged at the end of the side wall 14 in the first direction Z. A first tab 22 is formed at the end of the electrode assembly 2 close to the first wall portion 13 in the first direction Z; a first flow guide channel 7 is formed between the first tab 22 and the side wall 14; the spacer 4 directly or indirectly abuts against the first tab 22 in the first direction Z; and the spacer 4 is provided with a second flow guide channel 42 which communicates with the first flow guide channel 7 and the avoidance space 41.

The side wall 14 can be cylindrical, so that the battery cell 10 is a cylindrical battery cell; and the side wall 14 can be cuboid, and thus the battery cell 10 is a square-shell battery cell 10 or a blade battery cell 10. The side wall 14 and the first wall portion 13 can be integrally formed to form the shell 11; the end of the side wall 14 away from the first wall portion 13 in the first direction Z forms the opening of the shell 11; the side wall 14 and the first wall portion 13 can also be arranged in a separating manner; the first wall portion 13 serves as the end cover 12; the end of the side wall 14 close to the first wall portion 13 in the first direction Z forms the opening of the shell 11; and the first wall portion 13 and the side wall 14 can be connected by welding, bonding, roll-sealing, and the like.

The first flow guide channel 7 can be a gap formed between the outer circumferential surface of the tab and the inner circumferential surface 141 of the side wall. After the electrode assembly 2 is mounted in a shell 1, a gap communicating with the first flow guide channel 7 can be formed between the outer circumferential surface of a main body portion 21 and the inner circumferential surface 141 of the side wall, and the emissions generated by thermal runaway of the electrode assembly 2 can enter the first flow guide channel 7 through the gap. Definitely, if the outer circumferential surface of the main body portion 21 is coated with an insulating film, the gap communicating with the first flow guide gap can be formed between the outer circumferential surface of the insulating film and the inner circumferential surface 141 of the side wall. The inner circumferential surface 141 of the side wall serves as a surface of the side wall 14 facing the electrode assembly 2, and the inner circumferential surface can extend in the circumferential direction of the opening of the case 11 over a whole circumference. It is to be understood that if the side wall 14 is cylindrical, the inner circumferential surface 141 of the side wall is cylindrical; and if the side wall 14 is rectangular, the inner circumferential surface 141 of the side wall is rectangular.

The spacer 4 can directly abut against the first tab 22, or indirectly abut against the first tab 22 through an intermediate member. The intermediate member can be a conductive member or an insulating member. The spacer 4 can be provided with one or more second flow guide channels 42. If there are a plurality of second flow guide channels 42, the plurality of second flow guide channels 42 can be uniformly distributed in the circumferential direction of the spacer 4, or non-uniformly distributed in the circumferential direction of the spacer 4. The circumferential direction of the spacer 4 can be a circumferential direction of a circle surrounding a center line extending in the first direction Z.

The second flow guide channel can be a through hole that penetrates the inner circumferential surface and the outer circumferential surface of the spacer 4 only in a radial direction of the spacer 4, or a notch groove that penetrates the inner circumferential surface and the outer circumferential surface of the spacer 4 in the radial direction of the spacer 4 and extends to the end surface of one end of the spacer 4 in the first direction Z.

In the embodiments, the spacer 4 is provided with the second flow guide channel 42 which communicates the avoidance space 41 with the first flow guide channel 7; if the battery cell 10 is subjected to thermal runaway, and after the emissions on the side of the electrode assembly 2 flow to the first flow guide channel 7, the emissions can enter the avoidance space 41 through the second flow guide channel 42 on the spacer 4 and can quickly reach the vicinity of the pressure relief mechanism 131, thus the pressure relief mechanism 131 can be opened timely to relieve pressure, the risks of explosion and fire of the battery cell 10 are reduced, and the reliability of the battery cell 10 can be effectively improved.

In some embodiments, with reference to FIG. 9 to FIG. 11, FIG. 11 is a cross-sectional view of the spacer 4 in FIG. 10. The first tab 22 is formed at the end of the electrode assembly 2 close to the first wall portion 13 in the first direction Z; the spacer 4 includes a ring body 43 and a plurality of protrusions 44. In the first direction, the ring body 43 is provided with a first surface 431 and a second surface 432 which are opposite to each other, and the avoidance space 41 penetrates through the first surface 431 and the second surface 432. The plurality of protrusions 44 are arranged at intervals on the ring body 43 in the circumferential direction X of the ring body; at least portion of each protrusion 44 protrudes from the first surface 431; a second flow guide channel 42 is formed between parts of every two adjacent protrusions 44 protruding from the first surface 431, and the second flow guide channel 42 communicates with the avoidance space 41. In the first direction Z, one of the ring body 43 and the protrusions 44 directly or indirectly abuts against the first tab 22, while the first wall portion 13 directly or indirectly abuts against the other one of the ring body 43 and the protrusions 44.

It is to be understood that in the embodiment that the first flow guide channel 7 is formed between the first tab 22 and the side wall 14 of the shell 1, the second flow guide channel 42 is formed between every two adjacent protrusions 44 to communicate the first flow guide channel 7 with the avoidance space 41.

The ring body 43 is of an annular structure, such as a rectangular ring, and a circular ring. The avoidance space 41 penetrates through two ends of the spacer 4 in the first direction Z, and one portion of the avoidance space 41 is located in the ring body 43 while the other portion thereof is located in a central area of the plurality of protrusions 44. There can be two, three, four, five or more two, three, four, five or more protrusions 44 in the spacer 4. The plurality of protrusions 44 can be uniformly or non-uniformly distributed in the circumferential direction X of the ring body, and the circumferential direction X of the ring body is the circumferential direction of the spacer 4. The second flow guide channel 42 is formed between the parts of every two adjacent protrusions 44 protruding from the first surface 431, the second flow guide channels 42 of such structure can be a notch groove formed in the spacer 4. In the spacer 4, the second flow guide channels 42 is equal to that of the protrusions 44, and the second flow guide channels 42 and the protrusions 44 are alternately arranged in the circumferential direction X of the ring body.

The first surface 431 and the second surface 432 can be end surfaces of the two ends of the ring body 43 in the thickness direction, and the thickness direction of the ring body 43 is parallel to the first direction Z. The protrusions 44 can be completely protruded from the first surface 431, so that the protrusions 44 protrude from the first surface 431 in the direction deviating from the second surface 432; or the protrusions 44 are only partially protruded from the first surface 431, for example, the protrusions 44 are connected to the outer circumferential surface 433 or the inner circumferential surface of the ring body, and the protrusions 44 are locally located on the side of the first surface 431 deviating from the second surface 432, so that the protrusions 44 partially protrude from the first surface 431. The protrusions 44 and the ring body 43 can be arranged in a separating mode and connected, for example, the protrusions 44 and the ring body 43 are bonded and welded; and the protrusions 44 and the ring body 43 can be integrally formed, so that the protrusions 44 and the ring body 43 are of an integrated structure.

The ring body 43 can directly or indirectly abut against the first tab 22, the first wall portion 13 can directly or indirectly abut against the protrusions 44, the first surface 431 faces the first wall portion 13, and the second surface 432 faces the electrode assembly 2, that is, the first surface 431 is farther away from the electrode assembly 2 in the first direction Z than the second surface 432; or the protrusions 44 directly or indirectly abut against the first tab 22, the first wall portion 13 directly or indirectly abuts against the ring body 43, the first surface 431 faces the electrode assembly 2, and the second surface 432 faces the first wall portion 13, that is, the first surface 431 is closer to the electrode assembly 2 in the first direction Z than the second surface 432.

In the embodiment, one of the ring body 43 and the protrusions 44 directly or indirectly abuts against the first tab 22, and the first wall portion 13 directly or indirectly abuts against the other one of the ring body 43 and the protrusion 44, so that the intermediate member is supported between the first tab 22 and the first wall portion 13 and is capable of limiting the electrode assembly 2 to move close to the first wall portion 13, thereby reducing the risk that the electrode assembly 2 moves in the shell 1 in the first direction Z. The second flow guide channel 42 between every two adjacent protrusions 44 communicates with the avoidance space 41 of the spacer 4, and if the battery cell 10 is subjected to thermal runaway, the emissions on the side of the electrode assembly 2 can enter the avoidance space 41 through the second flow guide channel 42 between the every two adjacent protrusions 44 and can quickly reach the vicinity of the pressure relief mechanism 131, thus the pressure relief mechanism 131 can timely relieve pressure, thereby reducing the risk of explosion and fire of the battery cell 10, and effectively improving the reliability of the battery cell 10. That is, the second flow guide channel 42 and the avoidance space 41 can form an emission passing channel between the electrode assembly 2 and the first wall portion 13, and thus the emissions on the side of the electrode assembly 2 can quickly flow to the pressure relief mechanism 131.

In some embodiments, the battery cell 10 can include a first current collecting member 5 which is arranged between the spacer 4 and the first tab 22 in the first direction Z; the first current collecting member 5 is electrically connected to the spacer 4 and the first tab 22; and the first wall portion 13 is electrically connected to the spacer 4. In the first direction Z, the protrusions 44 directly abut against the first current collecting member 5 in the first direction Z; the first current collecting member 5 directly abuts against the first tab 22, and the first wall portion 13 directly abuts against the ring body 43.

The first current collecting member 5 and the spacer 4 are conductive members arranged between the electrode assembly 2 and the first wall portion 13. The first current collecting member 5 is electrically connected to the spacer 4 and the first tab 22; the first wall portion 13 is electrically connected to the spacer 4, such that the first wall portion 13 is electrically connected to the first tab 22, and the first wall portion 13 serves as an output electrode in the battery cell 10. If the first tab 22 is a positive electrode tab, the first wall portion 13 serves as a positive output electrode; and if the first tab 22 is a negative electrode plate, the first wall portion 13 serves as a negative output electrode.

The protrusions 44 directly abut against the first current collecting member 5 to realize electrical connection between the spacer 4 and the first current collecting member 5; the first current collecting member 5 directly abuts against the first tab 22 to realize electrical connection between the first current collecting member 5 and the first tab 22; and the first wall portion 13 directly abuts against the ring body 43 to realize electrical connection between the first wall portion 13 and the spacer 4. It is to be understood that in the embodiments, the first surface 431 is closer to the electrode assembly 2 than the second surface 432 in the first direction Z.

It is to be noted that "direct abutting" in the embodiments of the present application indicates that means that two components are in direct contact, and no intermediate material is placed between the two components, it does not limit the two components to only maintain contact without other connection relationships. That is, after the two components directly abut each other, other connection methods may also be used for fixing the two components. For example, the protrusions 44 directly abut against the first current collecting member 5, and the protrusions 44 are connected to the first current collecting member 5 by welding; the first current collecting member 5 directly abuts against the first tab 22, and the first current collecting member 5 is welded to the first tab 22; and the first wall portion 13 directly abuts against the ring body 43, and the first wall portion 13 is welded to the ring body 43.

As an example, as shown in FIG. 8, only one end of the shell 11 forms the opening, and the end cover 12 serves as the first wall portion 13; in the first direction Z, the first tab 22 and the second tab 23 are correspondingly arranged at two ends of the main body portion 21; the wall portion of the shell 11 opposite to the end cover 12 is provided with the electrode terminal 3, and the electrode terminal 3 is in insulating connection with the shell 11; the second tab 23 of the electrode assembly 2 is electrically connected to the electrode terminal 3 through the second current collecting member 6; the first current collecting member 5 is electrically connected to the spacer 4 and the first tab 22; and the spacer 4 is electrically connected to the first current collecting member 5 and the end cover 12. It is to be understood that the electrode terminal 3 serves as one output electrode of the battery cell 10, and the first wall portion 13 serves as the other output electrode of the battery cell 10.

In the embodiments, the first current collecting member 5 is arranged between the spacer 4 and the first tab 22, which realizes electrical connection between the first tab 22 and the spacer 4, thereby reducing the difficulty of electrical connection between the first tab 22 and the spacer 4. The protrusions 44 directly abut against the first current collecting member 5, and the first wall portion 13 directly abuts against the ring body 43, so that the second current guide channel 42 is formed in the side of the spacer 4 facing the electrode assembly 2, and the emissions on the side of the electrode assembly 2 can enter the second current guide channel 42 more quickly when the battery cell 10 is subjected to thermal runaway.

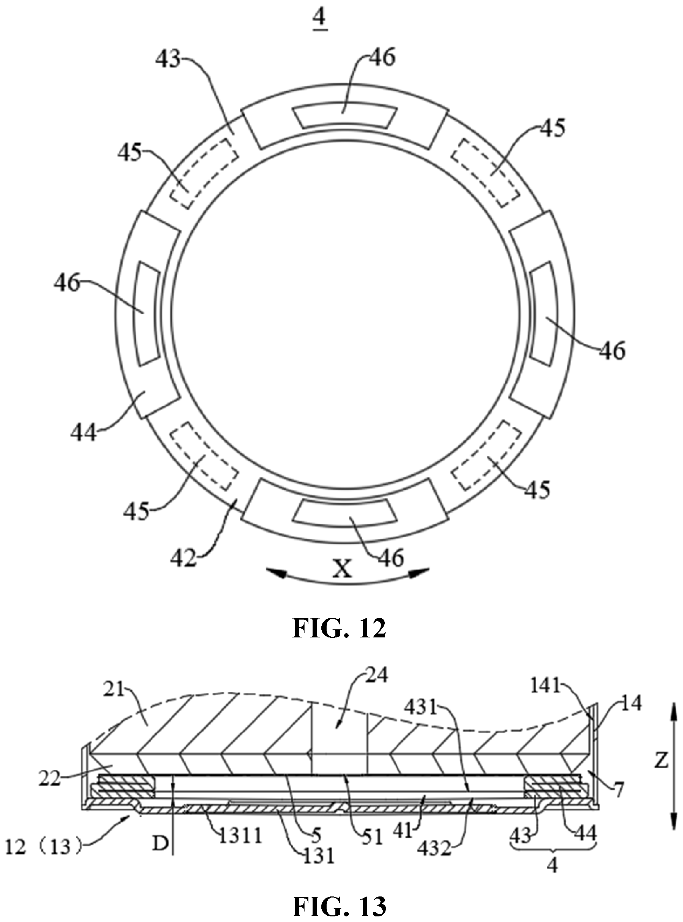

In some embodiments, with reference to FIG. 12, FIG. 12 is a view in a direction A of the spacer 4 in FIG. 11. The ring body 43 and the first wall portion 13 (shown in FIG. 9) are welded to form a first weld mark area 45, at least one protrusion 44 and the first current collecting member 5 (shown in FIG. 9) are welded to form a second weld mark area 46, and the projection of the first weld mark area 45 does not overlap with the projection of the second weld mark area 46 in the first direction Z.

The first weld mark area 45 is an area in which the ring body 43 and the first wall portion 13 are welded to form a weld mark, and the first weld mark area 45 can be a portion in which the ring body 43 and the first wall portion 13 are welded and fused. There can be one or more first weld mark areas 45.

The second weld mark area 46 is an area in which the protrusions 44 and the first current collecting member 5 are welded to form the weld mark, and the second weld mark area 46 can be a portion in which the protrusions 44 and the first current collecting member 5 are welded and fused. One protrusion 44 and the first current collecting member 5 can be welded to form one second weld mark area 46, or the plurality of protrusions 44 and the first current collecting member 5 can be welded to form a plurality of second weld mark areas 46 correspondingly.

The projection of the first weld mark area 45 in the first direction Z can be at a position on the spacer 4 corresponding to the second flow guide channel 42, and the projection of the first weld mark area 45 in the first direction Z can be at a position on the spacer 4 corresponding to the protrusions 44.

As an example, as shown in FIG. 12, a plurality of first weld mark areas 45 and a plurality of second weld mark areas 46 are provided; in the circumferential direction X of the ring body, the first weld mark areas 45 and the second weld mark areas 46 are alternately arranged, and the projections of the first weld mark areas 45 in the first direction Z are at the positions on the spacer 4 corresponding to the second flow guide channel 42.

In the embodiments, the projections of the first weld mark area 45 in the first direction Z do not overlap with the projections of the second weld mark areas 46 in the first direction Z, thus the mutual interference between the first weld mark areas 45 and the second weld mark areas 46 can be reduced, and the risk of dry joint in welding of the ring body 43 and the first wall portion 13 or in the welding of the protrusions 44 and the first current collecting member 5 can be reduced.

In some embodiments, with reference to FIG. 10 and FIG. 11, the protrusions 44 include first portions 441, and the first portions 441 include first bending portions 4411 and first connecting portions 4412; the first bending portions 4411 are connected to the outer circumferential surface 433 of the ring body, and the first connecting portions 4412 are connected to the first bending portions 4411 and are at least partially located on the side of the first surface 431 deviating from the second surface 432.

The protrusions 44 can include the first portions 441 only, and can also include other parts except the first portions 441. The outer circumferential surface 433 of the ring body is connected to the first surface 431 and the second surface 432. The first connecting portions 4412 are at least partially located on the side of the first surface 431 deviating from the second surface 432, such that the first surface 431 is located between at least portion of the first connecting portions 4412 and the second surface 432 in the first direction Z. The first connecting portions 4412 can be completely located on the side of the first surface 431 deviating from the second surface 432, and thus the first connecting portions 4412 and the ring body 43 are arranged in the first direction Z; or, only portion of the first connecting portions 4412 are located on the side of the first surface 431 deviating from the second surface 432. In the first direction Z, the first connecting portions 4412 can be in contact with the first surface 431, or a gap is formed therebetween.

The first connecting portions 4412 can be of a single-layer structure or a multi-layer structure formed by bending at least once. As an example, in the embodiment shown in FIG. 10, the first connecting portions 4412 are of the single-layer structure.

The first bending portions 4411 can be provided with process notches so as to reduce the force for bending the first bending portions 4411.

In the embodiments, the first portions 441 are structures connected to the outer circumferential surface 433 of the ring body and partially bent on the side of the first surface 431 away from the second surface 432; the first portions 441 are simple in structure, such that the difficulty in forming the protrusions 44 is reduced. In addition, because the first bending portions 4411 are connected to the outer circumferential surface 433 of the ring body and do not occupy space in the ring body 43, the avoidance space 41 can be increased, thus improving the avoidance capacity of the avoidance space 41 for the pressure relief mechanism 131 as well as improving the flow guide capacity of the avoidance space to flowing of the emissions.

In some embodiments, with reference to FIG. 10 and FIG. 11, the first connecting portions 4412 and the first surface 431 are arranged at an interval in the first direction Z.

A first gap 4413 is formed between the first connecting portions 4412 and the first surface 431, so that the first connecting portions 4412 are not in contact with the first surface 431.

In the embodiment, the first connecting portions 4412 and the first surface 431 are arranged at an interval in the first direction Z; the spacer 4 can perform buffering between the first wall portion 13 and the electrode assembly 2 to absorb the impact force on the first wall portion 13, thus reducing the risk of the electrode assembly 2 being damaged by the first wall portion 13 at external impact. In addition, the first gap 4413 can be formed between the first connecting portions 4412 and the first surface 431 to communicate two adjacent second flow guide channels 42; if the emissions on the side of the electrode assembly 2 flow to one second flow guide channel 42 in a centralized mode, the emissions can flow to the other adjacent second flow guide channel 42 through the first gap 4413, and therefore the emissions can enter the avoidance space 41 more quickly.

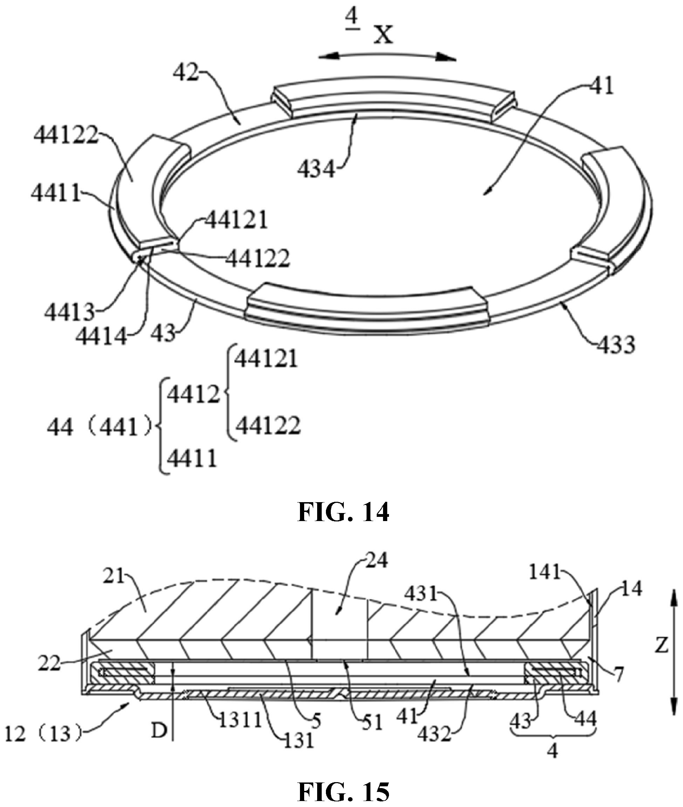

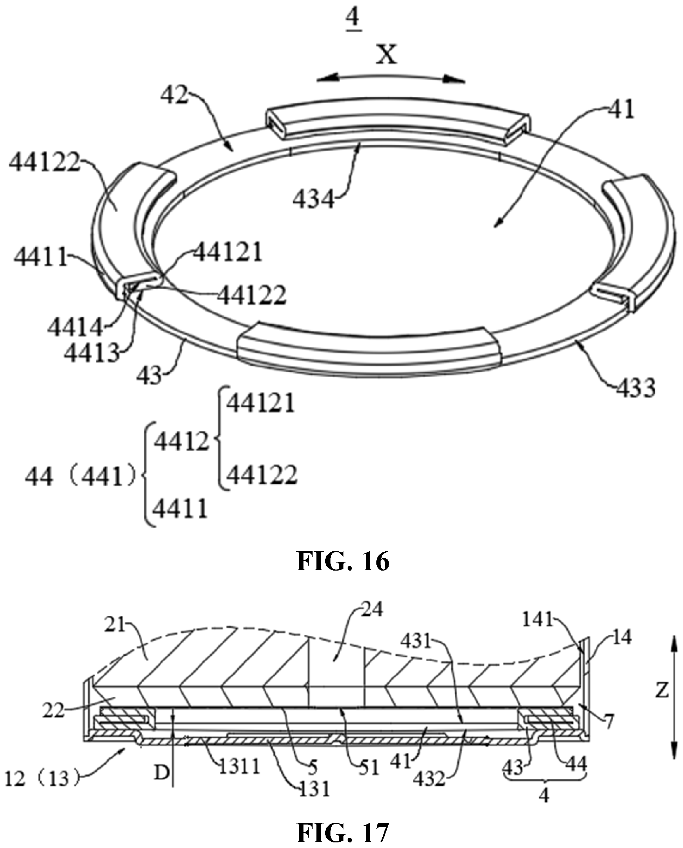

In some embodiments, with reference to FIG. 13 to FIG. 16, FIG. 13 is a partial view of the battery cell 10 provided by some embodiments of the present application (the protrusions 44 include the first portions 441 that are connected to the outer circumferential surface 433 of the ring body); FIG. 14 is an isometric view of the spacer 4 in FIG. 13; FIG. 15 is a partial view of the battery cell 10 provided by some other embodiments of the present application (the protrusions 44 include the first portions 441 that are connected to the outer circumferential surface 433 of the ring body); and FIG. 16 is an isometric view of the spacer 4 in FIG. 15. The first connecting portions 4412 include second bending portions 44121 and a plurality of first lamination portions 44122, and the plurality of first lamination portions 44122 are located on the side of the first surface 431 deviating from the second surface 432 and arranged in the first direction Z. The second bending portions 44121 are connected to two adjacent first lamination portions 44122.

There can be two, three, four, five or more first lamination portions 44122 in the first connecting portions 4412. Every two adjacent first lamination portions 44122 can be in direct contact, or the gap can be formed therebetween. Every two adjacent first lamination portions 44122 are connected through one second bending portion 44121; and in the first connecting portions 4412, the number of the first lamination portions 44122 is one more than that of the second bending portions 44121. The first bending portions 4411 can be connected to any one of the first lamination portions 44122, or connected to any one of the first bending portions 4411. Because the first connecting portions 4412 include a plurality of first lamination portions 44122, the first connecting portions 4412 are of the multi-layer structure.

The first portions 441 can be made of metal or insulating materials. In the embodiment that the protrusions 44 only include the first portions 441 and directly abut against the first current collecting member 5, the first portions 441 can be made of metal, and the first lamination portion 44122 farthest away from the ring body 43 in the first connecting portions 4412 abuts against the first current collecting member 5, and thus the electrical connection between the spacer 4 and the first current collecting member 5 is realized.

The second bending portions 44121 can be provided with the process notches so as to reduce the force for bending the second bending portions 44121.

In the embodiments, there are a plurality of first lamination portions 44122 in the first connecting portions 4412, and the plurality of first lamination portions 44122 are arranged on the side of the first surface 431 deviating from the second surface 432 in the first direction Z, and every two adjacent first lamination portions 44122 are connected through the corresponding second bending portion 44121; and by means of such structure, heights of the protrusions 44 protruding from the first surface 431 can be increased, thereby increasing the sizes of the second flow guide channel 42 in the first direction Z and improving the smoothness of the flow of emissions in the second flow guide channel 42.

In some embodiments, with reference to FIG. 14 and FIG. 16, every two adjacent first lamination portions 44122 are arranged at an interval in the first direction Z.

Every two adjacent first lamination portions 44122 are arranged at an interval in the first direction Z, and a second gap 4414 is formed between every two adjacent first lamination portions 44122, such that the two connected first lamination portions 44122 are not in contact.

In the embodiment, every two adjacent first lamination portions 44122 are arranged at an interval in the first direction Z; the second gap 4414 can be formed between the every two adjacent first lamination portions 44122, such that the first connecting portions 4412 can perform buffering between the first wall portion 13 and the electrode assembly 2 to absorb the impact force on the first wall portion 13, thereby reducing the risk of the electrode assembly 2 being damaged by the first wall portion 13 in external impact. In addition, the second gap 4414 formed between the every two adjacent first lamination portions 44122 can communicate the every two adjacent second flow guide channels 42, and if the emissions on the side of the electrode assembly 2 flow to one second flow guide channel 42 in a centralized mode, the emissions can flow to the other adjacent second flow guide channel 42 through the second gap 4414, and therefore, the emissions can enter the avoidance space 41 more quickly.

In some embodiments, with reference to FIG. 14, in the first direction Z, the first lamination portion 44122 closest to the first surface 431 is connected to the corresponding first bending portion 4411.

As an example, there are two first lamination portions 44122 in the first connecting portions 4412; there is one second bending portion 44121; and the first bending portions 4411, the first lamination portion 44122 close to the ring body 43, the second bending portion 44121, and the first lamination portion 44122 away from the ring body 43 are sequentially connected.

In some embodiments, with reference to FIG. 16, in the first direction Z, the first lamination portion 44122 farthest away from the first surface 431 is connected to the corresponding first bending portion 4411.

As an example, there are two first lamination portions 44122 in the first connecting portions 4412; there is one second bending portion 44121; and the first bending portions 4411, the first lamination portion 44122 away from the ring body 43, the second bending portion 44121, and the first lamination portion 44122 close the ring body 43 are sequentially arranged.

In some embodiments, with reference to FIG. 14 and FIG. 16, the first portions 441 are integrally bent and formed from a plate.

In the embodiments, the first portions 441 and the ring body 43 can be integrally formed; the first portions 441 and the ring body 43 can be arranged in a separating manner and connected, such as welding. The first connecting portions 4412 and the first bending portions 4411 can be correspondingly integrally bent and formed from the plate, and the first connecting portions 4412 can be bent many times to form a plurality of first lamination portions 44122.

In the embodiments, the first portions 441 are integrally bent and formed from the plate, and the first portions 441 of such the structure are high in structural stability and low in forming difficulty.

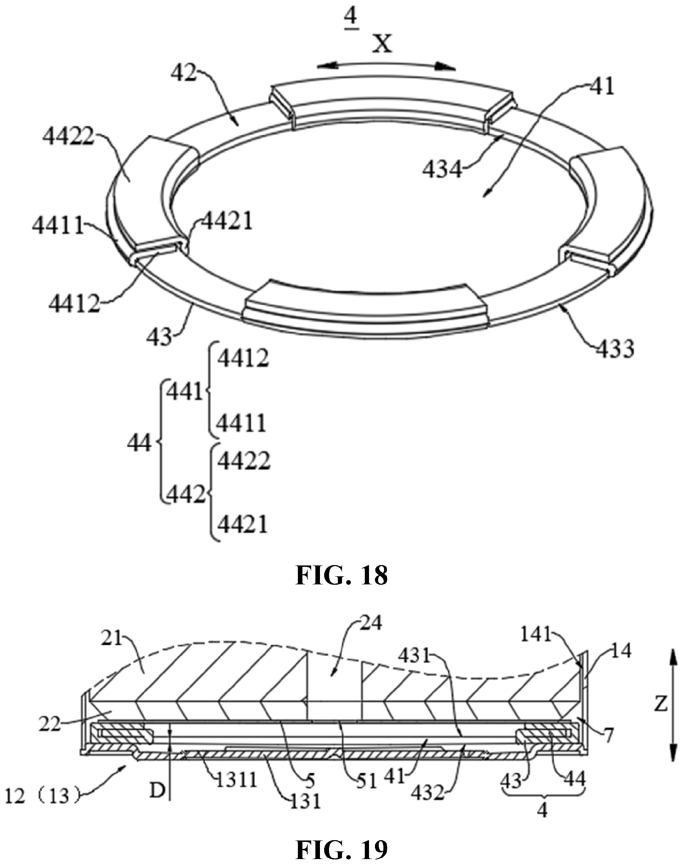

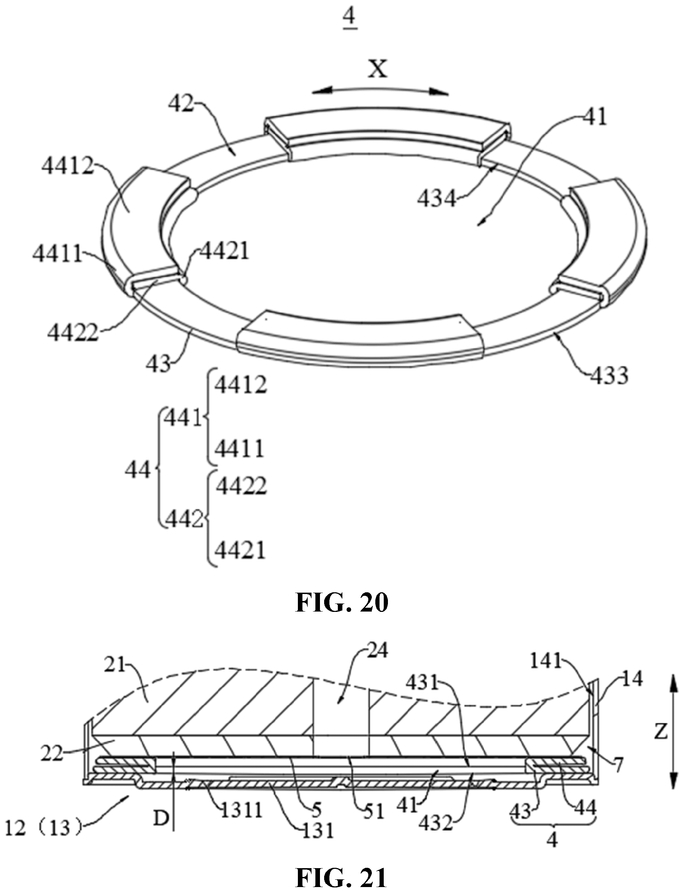

In some embodiments, with reference to FIG. 17 to FIG. 20, FIG. 17 is a partial view of the battery cell 10 provided by some embodiments of the present application (the protrusions 44 include the first portions 441 and the second portions 442, the first portions 441 are connected to the outer circumferential surface 433 of the ring body, and the second portions 442 are connected to the inner circumferential surface 434 of the ring body); FIG. 18 is an isometric view of the spacer 4 in FIG. 17; FIG. 19 is a partial view of the battery cell 10 provided by some other embodiments of the present application (the protrusions 44 include first portions 441 and second portions 442, the first portions 441 are connected to the outer circumferential surface 433 of the ring body, and the second portions 442 are connected to the inner circumferential surface 434 of the ring body); and FIG. 20 is an isometric view of the spacer 4 in FIG. 19. The protrusions 44 include the second protrusions 442, and the second protrusions 442 include third bending portions 4421 and second connecting portions 4422; the third bending portions 4421 are connected to the inner circumferential surface 434 of the ring body, the second connecting portions 4422 are connected to the third bending portions 4421 and at least partially located on the side of the first surface 431 deviating from the first surface 432, and the second connecting portions 4422 and the first connecting portions 4412 are arranged in the first direction Z. The first connecting portions 4412 are closer to the first surface 431 than the second connecting portions 4422 in the first direction Z; or, the second connecting portions 4422 are closer to the first surface 431 than the first connecting portions 4412 in the first direction Z.

In the embodiments, the protrusions 44 include the first portions 441 and the second protrusions 442, the first portions 441 are connected to the outer circumferential surface 433 of the ring body, and the second protrusions 442 are connected to the inner circumferential surface 434 of the ring body. The first connecting portions 4412 can be of a single-layer structure, or a multi-layer structure formed by bending once; and the first connecting portions 4412 can also be of a single-layer structure or a multi-layer structure formed by bending once.

In the embodiments shown in the FIG. 17 and FIG. 18, both the first connecting portions 4412 and the second connecting portions 4422 are of the single-layer structures, and the first connecting portions 4412 are closer to the first surface 431 than the second connecting portions 4422, that is, the first connecting portions 4412 are located between the second connecting portions 4422 and the ring body 43. The second connecting portions 4422 directly abut against the first current collecting member 5, and the first wall portion 13 directly abuts against the ring body 43.

In the embodiments shown in FIG. 19 and FIG. 20, both the first connecting portions 4412 and the second connecting portion 4422 are of single-layer structures, and the second connecting portions 4422 are closer to the first surface 431 than the first connecting portions 4412 in the first direction Z, that is, the second connecting portions 4422 are located between the first connecting portions 4412 and the ring body 43. The first connecting portions 4412 directly abut against the first current collecting member 5, and the first wall portion 13 directly abuts against the ring body 43.

In the embodiment, the second connecting portions 4422 of the second portions 442 and the first connecting portions 4412 of the first portions 441 are arranged in the first direction Z, which increases the heights of the protrusions 44 protruding from the first surface 431, thereby increasing the size of the second flow guide channel 42 in the first direction Z, and improving the flowing smoothness of the emissions in the second flow guide channel 42.

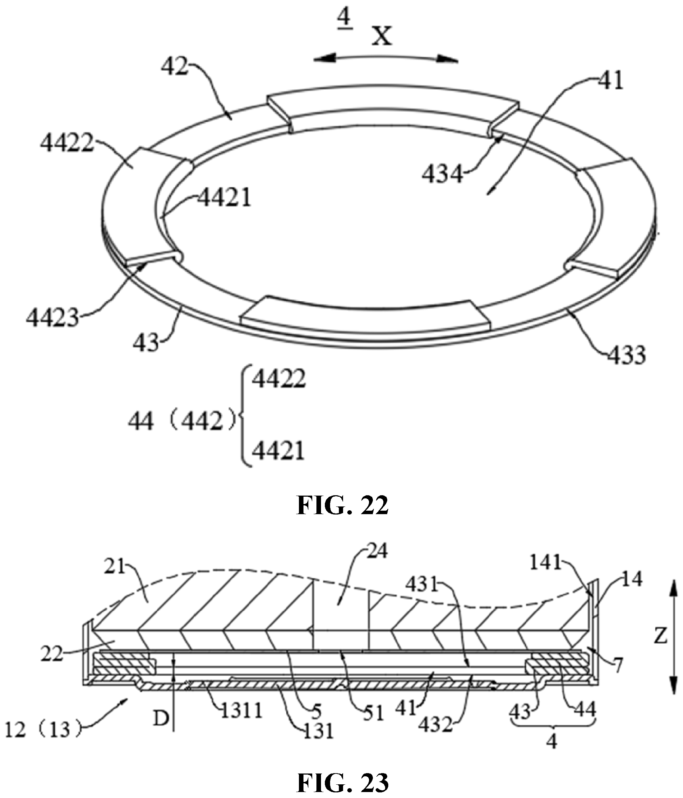

In some embodiments, with reference to FIG. 21 and FIG. 22, FIG. 21 is a partial view of the battery cell 10 provided by some embodiments of the present application (the first portions 441 are connected to the inner circumferential surface 434 of the ring body); and FIG. 22 is an isometric view of the spacer 4 in FIG. 21. The protrusions 44 include the second protrusions 442, and the second protrusions 442 include the third bending portions 4421 and the second connecting portions 4422; the third bending portions 4421 are connected to the inner circumferential surface 434 of the ring body; the second connecting portions 4422 are connected to the third bending portions 4421; and the second connecting portions 4422 are at least partially located on the side of the first surface 431 away from the second surface 432.

The protrusions 44 can include the second protrusions 442 only, and can also include other parts except the second protrusions 442, for example, the protrusions 44 also include the first portions 441 in the above embodiments. The inner circumferential surface 434 of the ring body is connected to the first surface 431 and the second surface 432. The second connecting portions 4422 are at least partially located on the side of the first surface 431 deviating from the second surface 432, such that the first surface 431 is located between at least portion of the second connecting portions 4422 and the second surface 432 in the first direction Z. The second connecting portions 4422 can be completely located on the side of the first surface 431 deviating from the second surface 432, and thus the second connecting portions 4422 and the ring body 43 are arranged in the first direction Z; or, only portion of the second connecting portions 4422 are located on the side of the first surface 431 deviating from the second surface 432. In the first direction Z, the second connecting portions 4422 can be in contact with the first surface 431, or a gap is formed therebetween.

The second connecting portions 4422 can be of a single-layer structure, or a multi-layer structure formed by bending at least once. As an example, in the embodiments shown in FIG. 21 and FIG. 22, the second connecting portions 4422 are of single-layer structure.

The third bending portions 4421 can be provided with process notches to reduce the force for bending the third bending portions 4421.

In the embodiment, the second portions 442 are structures connected to the inner circumferential surface 434 of the ring body and are partially bent on the side of the first surface 431 deviating from the second surface 432, and the second portions 442 are simple in structure, so that the forming difficulty of the protrusions 44 is reduced. In addition, because the third bending portions 4421 are connected to the inner circumferential surface 434 of the ring body, the sizes of the third bending portions 4421 in the circumferential direction X of the ring body can be decreased, and the material consumption of the third bending portions 4421 can be reduced.

In some embodiments, the second connecting portions 4422 and the first surface 431 are arranged at an interval in the first direction Z.

A third gap 4423 is formed between the second connecting portions 4422 and the first surface 431, so that the second connecting portions 4422 are not in contact with the first surface 431.

In the embodiment, the second connecting portions 4422 and the first surface 431 are arranged at an interval in the first direction Z; the spacer 4 can perform buffering between the first wall portion 13 and the electrode assembly 2 to absorb the impact force on the first wall portion 13, thus reducing the risk of the electrode assembly 2 being damaged by the first wall portion 13 at external impact. In addition, the third gap 4423 can be formed between the second connecting portions 4422 and the first surface 431 to communicate every two adjacent second flow guide channels 42; if the emissions on the side of the electrode assembly 2 flow to one second flow guide channel 42 in a centralized mode, the emissions can flow to the other adjacent second flow guide channel 42 through the third gap 4423, and therefore the emissions can enter the avoidance space 41 more quickly.

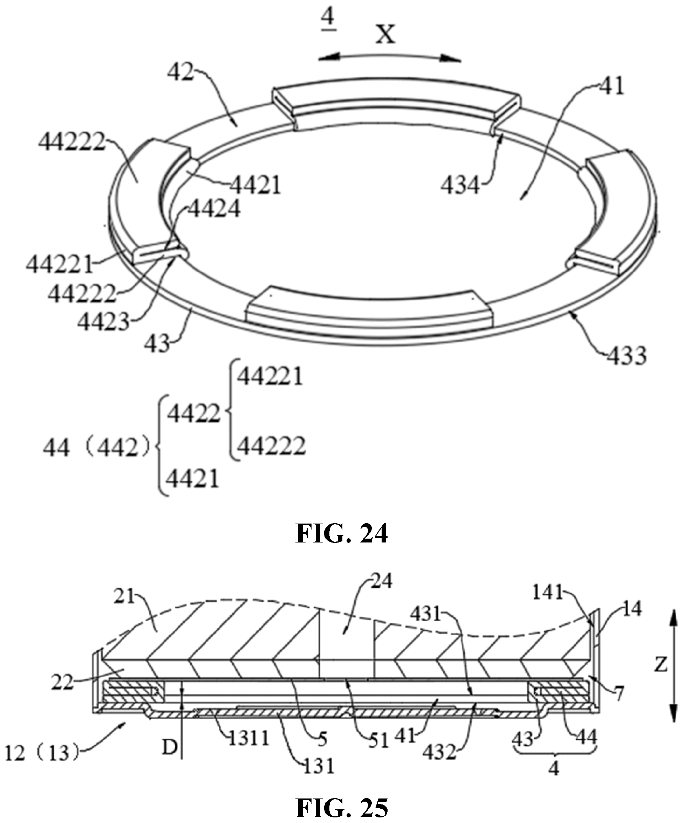

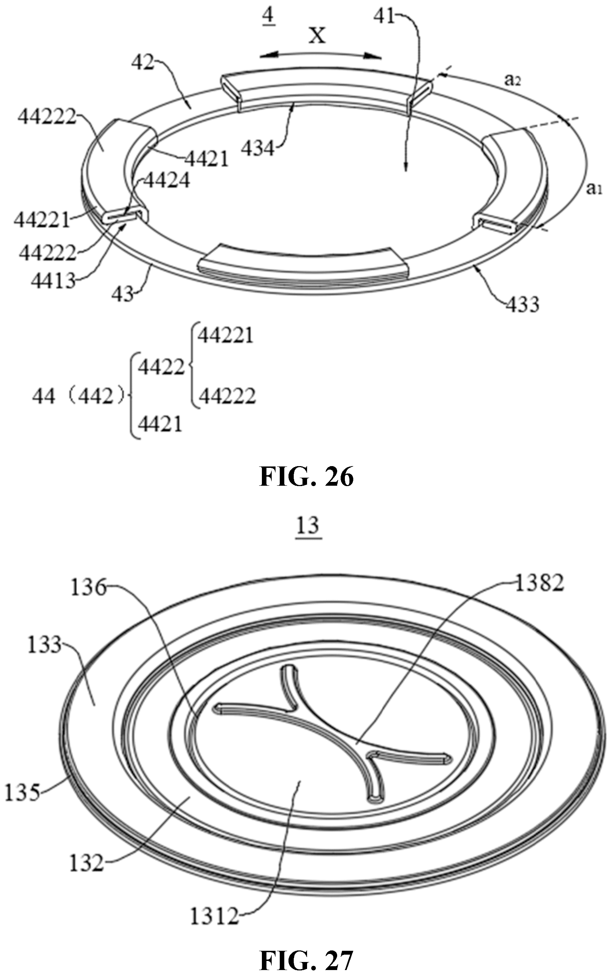

In some embodiments, with reference to FIG. 23 to FIG. 26, FIG. 23 is a partial view of the battery cell 10 provided by some other embodiments of the present application (the protrusions 44 include the second portions 442 that are connected to the inner circumferential surface 434 of the ring body); FIG. 24 is an isometric view of the spacer 4 in FIG. 23; FIG. 25 is a partial view of the battery cell 10 provided by yet some other embodiments of the present application (the protrusions 44 include the second portions 442 that are connected to the inner circumferential surface 434 of the ring body); and FIG. 26 is an isometric view of the spacer 4 in FIG. 25. The second connecting portions 4422 include fourth bending portions 44221 and a plurality of second lamination portions 44222; the plurality of second lamination portions are located on the side of the first surface 431 deviating from the second surface 432 and are arranged in the first direction Z. The fourth bending portions 44221 are connected to two adjacent second lamination portions 44222.

There can be two, three, four, five or more second lamination portions 44222 in the second connecting portions 4422. Every two adjacent second lamination portions 44222 can be in direct contact, or the gap can be formed therebetween. Every two adjacent second lamination portions 44222 are connected through one fourth bending portion 44221; and in the second connecting portions 4422, the number of the second lamination portions 44222 is one more than that of the fourth bending portions 44221. The third bending portions 4421 can be connected to any one of the second lamination portions 44222, or connected to any one of the fourth bending portions 44221. Because the second connecting portions 4422 include a plurality of second lamination portions 44222, the second connecting portions 4422 are of the multi-layer structure.

The second protrusions 442 can be made of metal materials or insulating materials. In the embodiments that the protrusions 44 include the second protrusions 442 only, and the protrusions 44 directly abut against the first current collecting member 5, the second protrusions 442 can be made of the metal material, and the second lamination portion 44222 which is farthest away from the ring body 43 in the second connecting portions 4422 abuts against the first current collecting member 5, thus realizing electrical connection between the spacer 4 and the first current collecting member 5.

The fourth bending portions 44221 can be provided with the process notches to reduce the force for bending the fourth bending portions 44221.

In this embodiment, there are a plurality of second lamination portions 44222 in the second connecting portions 4422, and the plurality of second lamination portions 44222 are arranged on the side of the first surface 431 deviating from the second surface 432 in the first direction Z, and every two adjacent second lamination portions 44222 are connected through the corresponding fourth bending portion 44221; and by means of such structure, the heights of the protrusions 44 protruding from the first surface 431 can be increased, thereby increasing the sizes of the second flow guide channel 42 in the first direction Z and improving the smoothness of the flow of emissions in the second flow guide channel 42.

In some embodiments, with reference to FIG. 24 and FIG. 26, every two adjacent second lamination portions 44222 are arranged at an interval in the first direction Z.

Every two adjacent second lamination portions 44222 are arranged at an interval in the first direction Z, and a fourth gap 4424 is formed between every two adjacent second lamination portions 44222, so that the two connected second lamination portions 44222 do not contact each other.

In this embodiment, every two adjacent second lamination portions 44222 are arranged at an interval in the first direction Z; the fourth gap 4424 can be formed between the every two adjacent second lamination portions 44222, such that the second connecting portions 4422 can perform buffering between the first wall portion 13 and the electrode assembly 2 to absorb the impact force on the first wall portion 13, thereby reducing the risk of the electrode assembly 2 being damaged by the first wall portion 13 in external impact. In addition, the fourth gap 4424 formed between the every two adjacent second lamination portions 44222 can communicate the every two adjacent second flow guide channels 42, and if the emissions on the side of the electrode assembly 2 flow to one second flow guide channel 42 in a centralized mode, the emissions can flow to the other adjacent second flow guide channel 42 through the fourth gap 4424, and therefore, the emissions can enter the avoidance space 41 more quickly.

In some embodiments, with reference to FIG. 24, in the first direction Z, the second lamination portion 44222 closest to the first surface 431 is connected to the corresponding third bending portion 4421.

As an example, there are two second lamination portions 44222 in the second connecting portions 4422; there is one fourth bending portion 44221; and the third bending portions 4421, the second lamination portion 44222 close to the ring body 43, the fourth bending portion 44221, and the second lamination portion 44222 away from the ring body 43 are sequentially connected.

In some embodiments, with reference to FIG. 26, in the first direction, the second lamination portion 44222 farthest away from the first surface 431 is connected to the corresponding third bending portion 4421.

As an example, there are two second lamination portions 44222 in the second connecting portions 4422; there is one fourth bending portion 44221; and the third bending portions 4421, the second lamination portion 44222 away from the ring body 43, the fourth bending portion 44221, and the second lamination portion 44222 close to the ring body 43 are sequentially arranged.

In some embodiments, the second protrusions 442 are integrally bent and formed from a plate.

In the embodiments, the second protrusions 442 and the ring body 43 can be integrally formed; the second protrusions 442 and the ring body 43 can be arranged in a separating manner and connected, such as welding. The second connecting portions 4422 and the third bending portions 4421 can be correspondingly integrally bent and formed from the plate, and the second connecting portions 4422 can be bent many times to form a plurality of second lamination portions 44222.

In the embodiments, the second protrusions 442 are integrally bent and molded from the plate; and the second protrusions 442 of such the structure are high in structural stability and low in forming difficulty.

In some embodiments, with reference to FIG. 25, in the first direction Z, the minimum thickness of the ring body 43 is D, and D≥0.3mm.

The thickness of the ring body 43 is the minimum distance from the first surface 431 to the second surface 432.

D can be any of the point values of 0.3 mm, 0.5 mm, 0.8 mm, 1 mm, 1.3 mm, 1.5 mm, 1.8 mm, 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, 5 mm, or any range value between any two of them.

In the embodiments, D≥0.3mm, thus the ring body 43 has enough thickness, on one hand, the ring body 43 has enough structural strength, and on the other hand, there is an enough distance from the electrode assembly 2 to the first wall portion 13, thereby further reducing of risk of the pressure relief mechanism 131 being damaged by direct impacting from the electrode assembly 2 when the electrode assembly 2 swells and deforms or the first wall portion 13 is deformed by external force.

In some embodiments, with reference to FIG. 25 and FIG. 26, the spacer 4 electrically connects the first wall portion 13 with the first tab 22; and in the circumferential direction X of the ring body, the sum of the maximum sizes of all protrusions 44 is A₁, the sum of the maximum sizes of all second flow guide channels 42 is A₂, and 0.1≤A₁/(A₁+ A₂)≤0.8.

The spacer 4 can be directly or directly connected to the first wall portion 13 to realize electrical connection between the spacer 4 and the first wall portion 13. The spacer 4 can be directly or indirectly connected to the first tab 22 to realize electrical connection between the spacer 4 and the first tab 22.

In the circumferential direction X of the ring body, the maximum sizes of all the protrusions 44 can be equal or unequal, and the maximum sizes of all the second flow guide channels 42 can be equal or unequal.

As an example, the ring body 43 is of a circular ring structure; in the circumferential direction X of the ring body, the protrusions 44 extend along an arc track, the maximum sizes of all the protrusions 44 are equal, and the maximum sizes of the protrusions 44 are the maximum arc lengths of the protrusions 44, and the maximum sizes of the second flow guide channels 42 are the maximum arc lengths of the second flow guide channels 42. The maximum sizes of the protrusions 44 are a₁, the maximum sizes of the second flow guide channels 42 are a₂, the number of the protrusions 44 and the number of the second flow guide channels 42 are n, A₁=a₁×n, A₂=a₂×n, A₁/(A₁+ A₂)=a₁/(a₁+ a₂).

A₁/(A₁+ A₂) can be any point value of 0.1, 0.15, 0.2, 0.25, 0.3, 0.35, 0.4, 0.45, 0.5, 0.55, 0.6, 0.65, 0.7, 0.75, 0.8, or any range value between any two of them.

A₁/(A₁+ A₂)≥0.1, so the size ratio of all protrusions 44 in the circumferential direction X of the ring body is not too small, and the whole protrusions 44 and components directly abutting against the protrusions have enough contact area to realize stable current conduction; A₁/(A₁+ A₂)≤0.8, so the size ratio of all second flow guide channels 42 in the circumferential direction X of the ring body is not too small, the emissions on the side of the electrode assembly 2 can quickly enter the avoidance space 41, and the pressure relief mechanism 131 can be opened more timely to relieve pressure.

In some embodiments, the spacer 4 electrically connects the first wall portion 13 and the electrode assembly 2.

It is to be understood that the spacer 4 is a conductive member. The spacer 4 can directly or indirectly abut against the first wall portion 13 to realize electrical connection between the spacer 4 and the first wall portion 13. The spacer 4 can directly or indirectly abut against the electrode assembly 2 to realize electrical connection between the spacer 4 and the electrode assembly 2.

In some embodiments, the spacer 4 not only plays a role in separating the first wall portion 13 from the electrode assembly 2, but also plays a role in electrically connecting the first wall portion 13 with the electrode assembly 2.

In some embodiments, the battery cell 10 includes the first current collecting member 5, the first current collecting member 5 is arranged between the spacer 4 and the electrode assembly 2 in the first direction Z and electrically connects the spacer 4 with the electrode assembly 2, and the projection of the first current collecting member 5 covers the avoidance space 41 in the first direction Z.

It is to be understood that the electrode assembly 2 and the first wall portion 13 are electrically connected through the first current collecting member 5 and the spacer 4, and the first current collecting member 5 and the spacer 4 are both conductive members.

In the embodiments, the avoidance space 41 can be a through hole that penetrates through the two opposite ends of the spacer 4 in the first direction Z and can also be an avoidance groove formed in the side of the spacer 4 facing the first wall portion 13.

In the embodiment that the avoidance space 41 penetrates through two ends of the spacer 4 in the first direction Z and the spacer 4 directly abuts against the first current collecting member 5, the projection of the first current collecting member 5 covers the avoidance space 41 in the first direction Z, so that the first current collecting member 5 covers one end of the avoidance space 41.

In the embodiment that the spacer 4 includes the ring body 43 and the protrusions 44, the first wall portion 13 directly abuts against the ring body 43, and the protrusions 44 directly abut against the first current collecting member 5, such that the second current guide channel 42 faces the first current collecting member 5; or the first wall portion 13 directly abuts against the protrusions 44, and the ring body 43 directly abuts against the first current collecting member 5, and thus the second current guide channel 42 faces the first wall portion 13.

In the embodiments, the first current collecting member 5 is arranged between the spacer 4 and the electrode assembly 2 to realize electric connection between the electrode assembly 2 and the spacer 4, thereby reducing the difficulty of electric connection between the electrode assembly 2 and the spacer 4.

In some embodiments, the spacer 4 and the first wall portion 13 are welded to form the first weld mark area 45, the spacer 4 and the first current collecting member 5 are welded to form the second weld mark area 46, and the projection of the first weld mark area 45 does not overlap with the projection of the second weld mark area 46 in the first direction Z.

The first weld mark area 45 is an area in which the spacer 4 and the first wall portion 13 are welded to form the weld mark, and the first weld mark area 45 can be a portion in which the spacer 4 and the first wall portion 13 are welded and fused. There can be one or more first weld mark areas 45.

The second weld mark area 46 is an area in which the spacer 4 and the first current collecting member 5 are welded to form the weld mark, and the second weld mark area 46 can be a portion in which the spacer 4 and the first current collecting member 5 are welded and fused. There can be one or more first weld mark areas 45. The number of the first weld mark areas 45 can be equal to or unequal to the number of the second weld mark areas 46. The projections of the first weld mark areas 45 in the first direction Z and the projections of the second weld mark areas 46 in the first direction Z can be arranged at intervals in the circumferential direction of the spacer 4, such that the projections of the first weld mark areas 45 do not overlap with the projections of the second weld mark areas 46. Taking the number of the first weld mark areas 45 and the number of the second weld mark areas 46 as an example, the first weld mark areas 45 and the second weld mark areas 46 can be alternately arranged in the circumferential direction of the spacer 4.

In the embodiment that the spacer 4 includes the ring body 43 and the protrusions 44, the ring body 43 and the first wall portion 13 can be welded to form the first weld mark area 45, and the protrusions 44 and the first current collecting member 5 can be welded to form the second weld mark area 46; or, the protrusions 44 and the first wall portion 13 are welded to form the first weld mark area 45, and the ring body 43 and the first current collecting member 5 are welded to form the second weld mark area 46.

As an example, the first current collecting member 5 is welded to the first tab 22 of the electrode assembly 2; and the first wall portion 13, the spacer 4, the first current collecting member 5, and the first tab 22 are made of the same material.

In the embodiment, the projection of the first weld mark area 45 in the first direction Z do not overlap with the projection of the second weld mark area 46 in the first direction Z, therefore, the mutual interference between the first weld mark area 45 and the second weld mark area 46 can be reduced, and the risk of dry joint in welding of the spacer 4 and the first wall portion 13 or in the welding of the spacer 4 and the first current collecting member 5 can be reduced.

In some embodiments, the first tab 22 is formed at the end of the electrode assembly 2 close to the first wall portion 13 in the first direction Z, and the material of the first tab 22 is different from that of the first wall portion 13. The material of the first current collecting member 5 is the same as that of the first tab 22, and the first current collecting member 5 is welded to the first tab 22. The material of the spacer 4 is the same as that of the first wall portion 13, and the spacer 4 is connected to the first wall portion 13 by welding. The first current collecting member 5 is in composite connection with the spacer 4.

The material of the first tab 22 can be copper, iron, aluminum, steel, aluminum alloy, and the like, and the material of the first wall portion 13 can be copper, iron, aluminum, steel, aluminum alloy, and the like. The first current collecting member 5 and the spacer 4 can be in composite connection by hot pressing, cold pressing, friction welding, and other modes to realize the fixation of the first current collecting member 5 and the spacer 4.

As an example, the first tab 22 serves as a negative electrode tab, the first tab 22 and the first current collecting member 5 are made of copper, and the first wall portion 13 and the spacer 4 are made of aluminum.

As an example, the first tab 22 serves as the negative electrode tab, the first tab 22 and the first current collecting member 5 are made of copper, and the first wall portion 13 and the spacer 4 are made of steel.

In the embodiments, the material of the first current collecting member 5 is the same as that of the first tab 22, so that the difficulty in welding the first current collecting member 5 and the first tab 22 can be reduced, the firmness of the first current collecting member 5 and the first tab 22 after welding can be improved, and stable current conduction between the first current collecting member 5 and the first tab 22 is realized; the material of the spacer 4 is the same as that of the first wall portion 13, thus the difficulty welding of the spacer 4 and the first wall portion 13 can be reduced, the firmness of the spacer 4 and the first wall portion 13 after welding can be improved, and stable current conduction between the spacer 4 and the first wall portion 13 is realized; and the first current collecting member 5 is in composite connection with the spacer 4, so that stable current conduction between the first current collecting member 5 and the spacer 4 can be realized, and stable current conduction between the first wall portion 13 and the first tab 22 is further realized.

In some embodiments, the electrode assembly 2 is provided with a first central hole 24, the first current collecting member 5 is provided with a second central hole 51, and the second central hole 51 communicates with the first central hole 24 and the avoidance space 41.

The avoidance space 41 can penetrate through the two ends of the spacer 4 in the first direction Z, and thus the second central hole 51 can communicate the first central hole 24 with the avoidance space 41.

As an example, the electrode assembly 2 is of the winding structure, and the first central hole 24 is located at the winding center of the winding structure. The first central hole 24 and the second central hole 51 are both cylindrical holes and are coaxially arranged, and a hole diameter of the first central hole 24 is larger than that of the second central hole 51.

If the battery cell 10 is subjected to thermal runaway, the emissions generated by the electrode assembly 2 can sequentially pass through the first central hole 24 and the second central hole 51 to enter the avoidance space 41, and the pressure relief mechanism 131 can be opened more timely to relieve pressure.

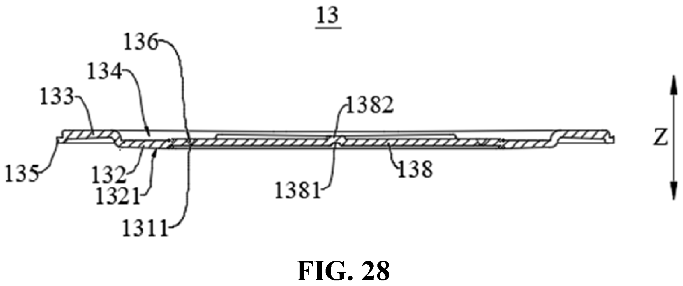

In some embodiments, with reference to FIG. 27 and FIG. 28, FIG. 27 is a schematic structural diagram of the first wall portion 13 provided by some embodiments of the present application; and FIG. 28 is a cross-sectional view of the first wall portion 13 in FIG. 27. The first wall portion 13 includes a wall body 132 and an abutting portion 133, the wall body 132 is provided with the pressure relief mechanism 131, and the abutting portion 133 is arranged around the outer edge of the wall body 132. In the first direction Z, the abutting portion 133 protrudes from the wall body 132 close to the electrode assembly 2 and directly or indirectly abuts against the spacer 4.

The end cover 12 serves as the first wall portion 13, or a wall portion of the case 11 opposite to the end cover 12 serves as the first wall portion 13. The wall body 132 and the abutting portion 133 can be integrally formed, or arranged in a separating mode and connected. The pressure relief mechanism 131 can be a pressure relief member separated from the wall body 132, and can also be of a structure integrated with the wall body 132.

The abutting portion 133 can be of an annular structure surrounding the outer edge of the wall body 132. After the abutting portion 133 directly or indirectly abuts against the spacer 4, the abutting portion 133 can be electrically connected to the electrode assembly 2 or can be in insulating connection with the electrode assembly 2. As an example, the abutting portion 133 directly abuts against the spacer 4 to realize electrical connection between the first wall portion 13 and the spacer 4.

The wall body 132 and the abutting portion 133 can jointly define a flow guide space 134, and the flow guide space 134 is arranged corresponding to the avoidance space 41 and communicates with the avoidance space 41. After the pressure relief mechanism 131 is opened, the emissions entering the avoidance space 41 can flow to the pressure relief mechanism 131 through the flow guide space 134 and finally are discharged to the outside of the battery cell 10 through the pressure relief mechanism 131.

In the embodiments, the abutting portion 133 protrudes from the wall body 132 to the electrode assembly 2 and directly or indirectly abuts against the spacer 4, which increases the distance from the pressure relief mechanism 131 to the spacer 4, thereby further reducing the influence of the spacer 4 on the pressure relief mechanism 131, and reducing the risk of the pressure relief mechanism 131 being damaged by direct impacting from the spacer 4 when the electrode assembly 2 swells and deforms or the first wall portion 13 is deformed by external force.

In some embodiments, with reference to FIG. 25, the shell 1 includes the side wall 14 which is separated from the first wall portion 13, the side wall 14 is arranged around the first wall portion 13, and the first wall portion 13 is arranged at the end of the side wall 14 in the first direction Z. At least one portion of the abutting portion 133 is accommodated in the side wall 14 and is in positioning fit with the side wall 14.

The first wall portion 13 and the side wall 14 are arranged in a separated mode, namely the first wall portion 13 and the side wall 14 are two parts which are not integrally formed. As an example, the first wall portion 13 serves as the end cover 12 in the shell 1, and the first wall portion 13 is connected to the side wall 14 by welding.

The portion of the abutting portion 133 accommodated in the side wall 14 is in positioning fit with the side wall 14, such that the outer circumferential surface of the abutting portion 133 and the inner circumferential surface 141 of the side wall are in a contact state. As an example, the portion of the abutting portion 133 accommodated in the side wall 14 is in interference fit with the side wall 14.

As an example, the first wall portion 13 can also include an edge portion 135 (shown in FIG. 27 and FIG. 28), the edge portion 135 is arranged around the outer edge of the abutting portion 133 and abuts against one end of the side wall 14 so as to limit the first wall portion 13 to move towards the electrode assembly 2 relative to the side wall 14.

In the embodiment, the first wall portion 13 and the side wall 14 are arranged in the separated manner, and thus the electrode assembly 2 can be conveniently arranged in the shell 1. The abutting portion 133 and the side wall 14 are in positioning fit, such that the difficulty in assembling of the first wall portion 13 and the side wall 14 can be effectively relieved. Taking that the first wall portion 13 and the side wall 14 are welded as an example, the abutting portion 133 and the side wall 14 are in positioning fit, thus the risk of radial deviation of the first wall portion 13 relative to the side wall 14 during the welding process can be effectively reduced, and the welding difficulty is reduced.

In some embodiments, with reference to FIG. 27 and FIG. 28, the pressure relief mechanism 131 and the first wall portion 13 are integrally formed.

In the embodiment, the pressure relief mechanism 131 and the first wall portion 13 are integrally formed to form the integrated pressure relief mechanism 131, so that the reliability of the pressure relief mechanism 131 is high, the process of installing the pressure relief mechanism 131 is omitted, and the economic efficiency is improved.

In some other embodiments, the pressure relief mechanism 131 and the first wall portion 13 are arranged in the separated manner, and the pressure relief mechanism 131 is mounted on the first wall portion 13.

The first wall portion 13 can be provided with a pressure relief hole, and the pressure relief mechanism 131 covers the pressure relief hole.

In the embodiments, the pressure relief mechanism 131 and the first wall portion 13 are arranged in the separated manner, and the pressure relief mechanism 131 is mounted on the first wall portion 13, thus the pressure relief mechanism 131 is a component independent of the shell 1, the pressure relief mechanism 131 and the shell 1 can be independently produced and assembled, the production difficulty is low, and the production efficiency is high.

In some embodiments, with reference to FIG. 27 and FIG. 28, the pressure relief mechanism 131 includes the weak portion 1311 and a pressure relief area 1312, and the weak portion 1311 is arranged along the edge of the pressure relief area 1312.

As an example, the pressure relief mechanism 131 is provided with the pressure relief groove 136, and thus the weak portion 1311 can be formed at a position on the pressure relief mechanism 131 corresponding to the pressure relief groove 136. The groove bottom wall of the pressure relief groove 136 can be the weak portion 1311, and the bottom wall of the pressure relief groove 136 is a portion of the first wall portion 13 at the bottom of the pressure relief groove 136 in the depth direction. The pressure relief groove 136 can be formed in the side of the first wall portion 13 facing the electrode assembly 2, with an opening facing the electrode assembly 2; and the pressure relief groove 136 can also be formed in the side of the first wall portion 13 deviating from the electrode assembly 2, with the opening facing the outside of the battery cell 10. The pressure relief groove 136 can be formed in multiple modes, such as punch forming, laser etching forming, and milling forming. The pressure relief groove 136 can be a groove extending along a closed track, and the closed track can be a circular track, a rectangular track and the like; and the pressure relief groove 136 can also be a groove extending along a non-closed track, and the non-closed track can be an H-shaped track, a V-shaped track, a C-shaped track, a Y-shaped track, and the like.

As an example, in embodiments shown in FIG. 27 and FIG. 28, in the first direction Z, the wall body 132 has a third surface 1321, and the third surface 1321 is an outer surface of the wall body 132 and is also the surface of the first wall portion 13 farthest away from the electrode assembly 2 in the first direction Z. The wall body 132 is provided with a groove 137, and the internal space of the groove 137 can be cylindrical, prismatic or the like; the groove 137 is sunken from the third surface 1321 to the electrode assembly 2; the pressure relief groove 136 is formed in a bottom wall 138 of the groove; and the bottom wall 138 of the groove is a portion of the first wall portion 13 at the bottom of the groove 137 in the depth direction. A concave portion 1381 is arranged on the side of the bottom wall 138 of the groove deviating from the electrode assembly 2; a reinforcing rib 1382 is formed at a position that is on the side of the bottom wall 138 of the groove facing the electrode assembly 2 and corresponds to the concave portion 1381; the reinforcing rib 1382 is the same as the concave portion 1381 in shape, and the reinforcing rib 1382 is approximately X-shaped. The pressure relief groove 136 is an annular groove and surrounds the outer side of the reinforcing rib 1382, the weak portion 1311 defines the pressure relief area 1312, and the concave portion 1381 and the reinforcing rib 1382 are located in the pressure relief area 1312. If the battery cell 10 is subjected to pressure relief, the wall body 132 cracks along the weak portion 1311, thus the pressure relief area 1312 is opened. The reinforcing rib 1382 is configured to reinforce the pressure relief area 1312, thus improving the deformation resistance of the pressure relief area 1312 and reducing the risk that the weak portion 1311 cracks in advance due to fatigue caused by deformation of the pressure relief area 1312 under internal pressure change of the battery cell 10.

In some embodiments, the shell 1 includes the case 11 and the end covers 12, at least one end of the case 11 in the first direction Z forms an opening, and the end covers 12 close the opening. At least one end cover 12 serves as the first wall portion 13.

An opening can be formed in only one end of the case 11 in the first direction Z, and one end cover 12 is correspondingly arranged. Openings can be formed in both ends of the case 11 in the first direction Z, and two end covers 12 are correspondingly arranged and correspondingly seal the two opposite openings of the case 11; one end cover 12 serves as the first wall portion 13, or both two end covers 12 serve as the first wall portions 13. It is to be understood that the first wall portion 13 and the side wall 14 are arranged in a separated manner.

In the embodiments, at least one end cover 12 serves as the first wall portion 13, such that at least one end cover 12 is provided with the pressure relief mechanism 131, and the forming difficulty or the mounting difficulty of the pressure relief mechanism 131 is reduced.

In some embodiments, the battery cell 10 is a cylindrical battery cell.

It is to be understood that the battery cell 10 is in a cylindrical shape, and the axial direction of the battery cell 10 is parallel to the first direction Z.

The embodiment of the present application provides a battery 100, which includes the battery cell 10 provided by any one of the above embodiments.

The embodiment of the present application provides an electrical device, which includes the battery cell 10 provided by any one of the above embodiments, and the battery cell 10 is configured to provide electric energy for the electrical device.

In addition, with reference to FIG. 8 to FIG. 11, the embodiment of the present application provides a cylindrical battery cell, which includes the shell 1, the electrode assembly 2, the pressure relief mechanism 131, the electrode terminal 3, the spacer 4, the first current collecting member 5, and a second current collecting member 6. The electrode assembly 2, the spacer 4, the first current collecting member 5, and the second current collecting member 6 are all accommodated in the shell 1. The shell 1 includes the case 11 and the end cover 12; the opening is formed in only one end of the case 11 in the first direction Z, and the end cover 12 seals the opening; and the first direction Z is parallel to the axial direction of the shell 1. The electrode assembly 2 includes the main body portion 21, the first tab 22, and the second tab 23; the first tab 22 and the second tab 23 are opposite in polarity; and in the first direction Z, the first tab 22 and the second tab 23 are correspondingly arranged at the two ends of the main body portion 21. The electrode terminal 3 is mounted on the wall portion of the case 11 opposite to the end cover 12 in an insulating manner; and the electrode terminal 3 is electrically connected to the second tab 23 through the second current collecting member 6. In the first direction Z, the first current collecting member 5 and the spacer 4 are arranged between the electrode assembly 2 and the end cover 12; the first current collecting member 5 is located between the electrode assembly 2 and the spacer 4; the first current collecting member 5 electrically connects the spacer 4 with the first tab 22; the spacer 4 electrically connects the first current collecting member 5 with the end cover 12.

The end cover 12 serves as the first wall portion 13 of the shell 1; the pressure relief mechanism 131 is arranged on the first wall portion 13 and is configured to be at least partially opened when the battery cell 10 is subjected to pressure relief; the spacer 4 is provided with the avoidance space 41; the avoidance space 41 is the through hole that penetrates through the two ends of the spacer 4 in the first direction Z; the avoidance space 41 is configured to avoid the pressure relief mechanism 131; and the projection of the spacer 4 in the first direction Z does not overlap with the projection of the pressure relief mechanism 131.

The first flow guide channel 7 is formed between the first tab 22 and the side wall 14 of the case 11. The spacer 4 includes the ring body 43 and the plurality of protrusions 44; the ring body 43 is provided with the first surface 431 and the second surface 432 which are opposite to each other; the avoidance space 41 penetrates through the first surface 431 and the second surface 432; the plurality of protrusions 44 are arranged at intervals on the ring body 43 in the circumferential direction X; the protrusions 44 at least partially protrude from the first surface 431; the second flow guide channel 42 is formed between the parts of every two adjacent protrusions 44 protruding from the first surface 431; and the second flow guide channel 42 communicates the avoidance space 41 with the first flow guide channel 7. In the first direction Z, the protrusions 44 directly abut against the first current collecting member 5; and the first wall portion 13 directly abuts against the ring body 43.

The protrusions 44 include the first portions 441 which are integrally bent and formed from the plate; the first portions 441 include the first bending portions 4411 and the first connecting portions 4412; the first bending portions 4411 are connected to the outer circumferential surface 433 of the ring body; the first connecting portions 4412 are connected to the first bending portions 4411; the first connecting portions 4412 are located on the sides of the first surface 431 deviating from the second surface 432; and the first connecting portions 4412 and the first surface 431 are arranged at intervals. In the first direction Z, the first connecting portions 4412 directly abut against the first current collecting member 5. The first connecting portions 4412 can be of a single-layer structure, or a multi-layer structure formed by bending at least once.

With reference to FIG. 17 to FIG. 18, the embodiment of the present application provides a cylindrical battery cell, which includes the shell 1, the electrode assembly 2, the pressure relief mechanism 131, the electrode terminal 3 (not shown in FIG. 17 and FIG. 18), the spacer 4, the first current collecting member 5 (not shown in FIG. 17 and FIG. 18), and the second current collecting member 6. The electrode assembly 2, the spacer 4, the first current collecting member 5, and the second current collecting member 6 are all accommodated in the shell 1. The shell 1 includes the case 11 and the end cover 12; the opening is formed in only one end of the case 11 in the first direction Z, and the end cover 12 seals the opening; and the first direction Z is parallel to the axial direction of the shell 1. The electrode assembly 2 includes the main body portion 21, the first tab 22, and the second tab 23; the first tab 22 and the second tab 23 are opposite in polarity; and in the first direction Z, the first tab 22 and the second tab 23 are correspondingly arranged at the two ends of the main body portion 21. The electrode terminal 3 is mounted on the wall portion of the case 11 opposite to the end cover 12 in an insulating manner; and the electrode terminal 3 is electrically connected to the second tab 23 through the second current collecting member 6. In the first direction Z, the first current collecting member 5 and the spacer 4 are arranged between the electrode assembly 2 and the end cover 12; the first current collecting member 5 is located between the electrode assembly 2 and the spacer 4; the first current collecting member 5 electrically connects the spacer 4 with the first tab 22; the spacer 4 electrically connects the first current collecting member 5 with the end cover 12.

The end cover 12 serves as the first wall portion 13 of the shell 1; the pressure relief mechanism 131 is arranged on the first wall portion 13 and is configured to be at least partially opened when the battery cell 10 is subjected to pressure relief; the spacer 4 is provided with the avoidance space 41; the avoidance space 41 is the through hole that penetrates through the two ends of the spacer 4 in the first direction Z; the avoidance space 41 is configured to avoid the pressure relief mechanism 131; and the projection of the spacer 4 in the first direction Z does not overlap with the projection of the pressure relief mechanism 131.

The first flow guide channel 7 is formed between the first tab 22 and the side wall 14 of the case 11. The spacer 4 includes the ring body 43 and the plurality of protrusions 44; the ring body 43 is provided with the first surface 431 and the second surface 432 which are opposite to each other; the avoidance space 41 penetrates through the first surface 431 and the second surface 432; the plurality of protrusions 44 are arranged at intervals on the ring body 43 in the circumferential direction X; the protrusions 44 at least partially protrude from the first surface 431; the second flow guide channel 42 is formed between the parts of every two adjacent protrusions 44 protruding from the first surface 431; and the second flow guide channel 42 communicates the avoidance space 41 with the first flow guide channel 7. In the first direction Z, the protrusions 44 directly abut against the first current collecting member 5; and the first wall portion 13 directly abuts against the ring body 43.

The protrusions 44 include the first portions 441 which are integrally bent and formed from the plate and the second portions 442 which are integrally bent and formed from the plate. The first portions 441 include the first bending portions 4411 and the first connecting portions 4412; the first bending portions 4411 are connected to the outer circumferential surface 433 of the ring body; and the first connecting portions 4412 are connected to the first bending portions 4411 and are located on the side of the first surface 431 deviating from the second surface 432. The first connecting portions 4412 can be of a single-layer structure or a multi-layer structure formed by bending at least once. The second portions 442 include the third bending portions 4421 and the second connecting portions 4422; the third bending portions 4421 are connected to the inner circumferential surface 434 of the ring body; the second connecting portions 4422 are connected to the third bending portion 4421 and located on the side of the first surface 431 deviating from the second surface 432. The second connecting portions 4422 can be of a single-layer structure, or a multi-layer structure formed by bending at least once. In the first direction Z, the second connecting portions 4422 are closer to the electrode assembly 2 than the first connecting portions 4412, and the second connecting portions 4422 directly abut against the first current collecting member 5.

With reference to FIG. 19 to FIG. 20, the embodiment of the present application provides a cylindrical battery cell, which includes the shell 1, the electrode assembly 2, the pressure relief mechanism 131, the electrode terminal 3 (not shown in FIG. 19 and FIG. 20), the spacer 4, the first current collecting member 5 (not shown in FIG. 19 and FIG. 20), and the second current collecting member 6. The electrode assembly 2, the spacer 4, the first current collecting member 5, and the second current collecting member 6 are all accommodated in the shell 1. The shell 1 includes the case 11 and the end cover 12; the opening is formed in only one end of the case 11 in the first direction Z, and the end cover 12 seals the opening; and the first direction Z is parallel to the axial direction of the shell 1. The electrode assembly 2 includes the main body portion 21, the first tab 22, and the second tab 23; the first tab 22 and the second tab 23 are opposite in polarity; and in the first direction Z, the first tab 22 and the second tab 23 are correspondingly arranged at the two ends of the main body portion 21. The electrode terminal 3 is mounted on the wall portion of the case 11 opposite to the end cover 12 in an insulating manner; and the electrode terminal 3 is electrically connected to the second tab 23 through the second current collecting member 6. In the first direction Z, the first current collecting member 5 and the spacer 4 are arranged between the electrode assembly 2 and the end cover 12; the first current collecting member 5 is located between the electrode assembly 2 and the spacer 4; the first current collecting member 5 electrically connects the spacer 4 with the first tab 22; the spacer 4 electrically connects the first current collecting member 5 with the end cover 12.

The end cover 12 serves as the first wall portion 13 of the shell 1; the pressure relief mechanism 131 is arranged on the first wall portion 13 and is configured to be at least partially opened when the battery cell 10 is subjected to pressure relief; the spacer 4 is provided with the avoidance space 41; the avoidance space 41 is the through hole that penetrates through the two ends of the spacer 4 in the first direction Z; the avoidance space 41 is configured to avoid the pressure relief mechanism 131; and the projection of the spacer 4 in the first direction Z does not overlap with the projection of the pressure relief mechanism 131.

The first flow guide channel 7 is formed between the first tab 22 and the side wall 14 of the case 11. The spacer 4 includes the ring body 43 and the plurality of protrusions 44; the ring body 43 is provided with the first surface 431 and the second surface 432 which are opposite to each other; the avoidance space 41 penetrates through the first surface 431 and the second surface 432; the plurality of protrusions 44 are arranged at intervals on the ring body 43 in the circumferential direction X; the protrusions 44 at least partially protrude from the first surface 431; the second flow guide channel 42 is formed between the parts of every two adjacent protrusions 44 protruding from the first surface 431; and the second flow guide channel 42 communicates the avoidance space 41 with the first flow guide channel 7. In the first direction Z, the protrusions 44 directly abut against the first current collecting member 5; and the first wall portion 13 directly abuts against the ring body 43.

The protrusions 44 include the first portions 441 which are integrally bent and formed from the plate and the second portions 442 which are integrally bent and formed from the plate. The first portions 441 include the first bending portions 4411 and the first connecting portions 4412; the first bending portions 4411 are connected to the outer circumferential surface 433 of the ring body; and the first connecting portions 4412 are connected to the first bending portions 4411 and are located on the side of the first surface 431 deviating from the second surface 432. The first connecting portions 4412 can be of a single-layer structure or a multi-layer structure formed by bending at least once. The second portions 442 include the third bending portions 4421 and the second connecting portions 4422; the third bending portions 4421 are connected to the inner circumferential surface 434 of the ring body; the second connecting portions 4422 are connected to the third bending portion 4421 and located on the side of the first surface 431 deviating from the second surface 432. The second connecting portions 4422 can be of a single-layer structure, or a multi-layer structure formed by bending at least once. In the first direction Z, the first connecting portions 4412 are closer to the electrode assembly 2 than the second connecting portions 4422, and the first connecting portions 4412 directly abut against the first current collecting member 5.

With reference to FIG. 21 to FIG. 22, the embodiment of the present application provides a cylindrical battery cell, which includes the shell 1, the electrode assembly 2, the pressure relief mechanism 131, the electrode terminal 3 (not shown in FIG. 21 and FIG. 22), the spacer 4, the first current collecting member 5 (not shown in FIG. 21 and FIG. 22), and the second current collecting member 6. The electrode assembly 2, the spacer 4, the first current collecting member 5, and the second current collecting member 6 are all accommodated in the shell 1. The shell 1 includes the case 11 and the end cover 12; the opening is formed in only one end of the case 11 in the first direction Z, and the end cover 12 seals the opening; and the first direction Z is parallel to the axial direction of the shell 1. The electrode assembly 2 includes the main body portion 21, the first tab 22, and the second tab 23; the first tab 22 and the second tab 23 are opposite in polarity; and in the first direction Z, the first tab 22 and the second tab 23 are correspondingly arranged at the two ends of the main body portion 21. The electrode terminal 3 is mounted on the wall portion of the case 11 opposite to the end cover 12 in an insulating manner; and the electrode terminal 3 is electrically connected to the second tab 23 through the second current collecting member 6. In the first direction Z, the first current collecting member 5 and the spacer 4 are arranged between the electrode assembly 2 and the end cover 12; the first current collecting member 5 is located between the electrode assembly 2 and the spacer 4; the first current collecting member 5 electrically connects the spacer 4 with the first tab 22; the spacer 4 electrically connects the first current collecting member 5 with the end cover 12.

The end cover 12 serves as the first wall portion 13 of the shell 1; the pressure relief mechanism 131 is arranged on the first wall portion 13 and is configured to be at least partially opened when the battery cell 10 is subjected to pressure relief; the spacer 4 is provided with the avoidance space 41; the avoidance space 41 is the through hole that penetrates through the two ends of the spacer 4 in the first direction Z; the avoidance space 41 is configured to avoid the pressure relief mechanism 131; and the projection of the spacer 4 in the first direction Z does not overlap with the projection of the pressure relief mechanism 131.

The first flow guide channel 7 is formed between the first tab 22 and the side wall 14 of the case 11. The spacer 4 includes the ring body 43 and the plurality of protrusions 44; the ring body 43 is provided with the first surface 431 and the second surface 432 which are opposite to each other; the avoidance space 41 penetrates through the first surface 431 and the second surface 432; the plurality of protrusions 44 are arranged at intervals on the ring body 43 in the circumferential direction X; the protrusions 44 at least partially protrude from the first surface 431; the second flow guide channel 42 is formed between the parts of every two adjacent protrusions 44 protruding from the first surface 431; and the second flow guide channel 42 communicates the avoidance space 41 with the first flow guide channel 7. In the first direction Z, the protrusions 44 directly abut against the first current collecting member 5; and the first wall portion 13 directly abuts against the ring body 43.

The protrusions 44 include the second portions 442 which are integrally bent and formed from the plate; the second portions 442 include the third bending portions 4421 and the second connecting portions 4422; the third bending portions 4421 are connected to the inner circumferential surface 434 of the ring body; the second connecting portions 4422 are connected to the third bending portions 4421; the second connecting portions 4422 are located on the sides of the first surface 431 deviating from the second surface 432; and the second connecting portions 4422 and the first surface 431 are arranged at intervals. In the first direction Z, the second connecting portions 4422 directly abut against the first current collecting member 5. The second connecting portions 4422 can be of a single-layer structure, or a multi-layer structure formed by bending at least once.

It is to be noted that, without conflict, the embodiments in the present application and the features in the embodiments may be combined with each other.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
a shell which is provided with a first wall portion;
a pressure relief mechanism which is arranged on the first wall portion and is configured to be at least partially opened when the battery cell is subjected to pressure relief;
an electrode assembly which is accommodated in the shell, the electrode assembly and the first wall portion being oppositely arranged in a first direction; and
a spacer which is arranged between the first wall portion and the electrode assembly, the spacer being provided with an avoidance space, a projection of the pressure relief mechanism being at least partially located in the avoidance space in the first direction; and the avoidance space being configured to avoid the pressure relief mechanism.

2. The battery cell according to claim 1, wherein the avoidance space is a through hole that penetrates through two ends of the spacer in the first direction.

3. The battery cell according to claim 2, wherein the projection of the spacer does not overlap with the projection of the pressure relief mechanism in the first direction.

4. The battery cell according to any one of claims 1 to 3, wherein the pressure relief mechanism comprises a weak portion which is configured to be at least partially cracked when the battery cell is subjected to pressure relief, and the projection of the weak portion is completely located in the avoidance space in the first direction.

5. The battery cell according to any one of claims 1 to 4, wherein the shell comprises a side wall which is arranged around the first wall portion, and the first wall portion is arranged at an end of the side wall in the first direction;
a first tab is formed at the end of the electrode assembly close to the first wall portion in the first direction; a first flow guide channel is formed between the first tab and the side wall; the spacer directly or indirectly abuts against the first tab in the first direction; and the spacer is provided with a second flow guide channel which communicates the first flow guide channel with the avoidance space.

6. The battery cell according to any one of claims 1 to 5, wherein the first tab is formed at the end of the electrode assembly close to the first wall portion in the first direction; the spacer comprises:
a ring body which is provided with a first surface and a second surface which are opposite to each other in the first direction, the avoidance space penetrating through the first surface and the second surface; and
a plurality of protrusions which are arranged at intervals on the ring body in the circumferential direction of the ring body and at least partially protrude from the first surface, a second flow guide channel being formed between parts of every two adjacent protrusions protruding from the first surface, and the second flow guide channel communicating with the avoidance space; and
in the first direction, one of the ring body and the protrusions directly or indirectly abuts against the first tab, while the first wall portion directly or indirectly abuts against the other one of the ring body and the protrusions.

7. The battery cell according to claim 6, comprising:
a first current collecting member which is arranged between the spacer and the first tab in the first direction, the first current collecting member electrically connecting the spacer with the first tab, and the first wall portion being electrically connected to the spacer; and
in the first direction, the protrusions directly abut against the first current collecting member, the first current collecting member directly abuts against the first tab, and the first wall portion directly abuts against the ring body.

8. The battery cell according to claim 7, wherein the ring body and the first wall portion are welded to form a first weld mark area, at least one protrusion and the first current collecting member are welded to form a second weld mark area, and the projection of the first weld mark area does not overlap with the projection of the second weld mark area in the first direction.

9. The battery cell according to any one of claims 6 to 8, wherein the protrusions comprise first portions, and the first portions comprise first bending portions and first connecting portions; the first bending portions are connected to an outer circumferential surface of the ring body, and the first connecting portions are connected to the first bending portions and are at least partially located on the side of the first surface deviating from the second surface.

10. The battery cell according to claim 9, wherein in the first direction, the first connecting portions and the first surface are arranged at an interval.

11. The battery cell according to claim 9 or 10, wherein the first connecting portions comprise:
a plurality of first lamination portions which are located on the side of the first surface deviating from the second surface and arranged in the first direction; and
second bending portions which are connected to every two adjacent first lamination portions.

12. The battery cell according to claim 11, wherein in the first direction, every two adjacent first lamination portions are arranged at an interval.

13. The battery cell according to claim 11 or 12, wherein the first lamination portion farthest away from the first surface is connected to the corresponding first bending portion in the first direction; or, the first lamination portion closest to the first surface is connected to the corresponding first bending portion in the first direction.

14. The battery cell according to any one of claims 9 to 13, wherein the first portions are integrally bent and formed from a plate.

15. The battery cell according to any one of claims 9 to 14, wherein the protrusions comprise second portions, and the second portions comprise third bending portions and second connecting portions; the third bending portions are connected to an inner circumferential surface of the ring body, the second connecting portions are connected to the third bending portions, the second connecting portions are at least partially located on the side of the first surface deviating from the second surface, and the second connecting portions and the first connecting portions are arranged in the first direction;
the first connecting portions are closer to the first surface in the first direction than the second connecting portions; or, the second connecting portions are closer to the first surface in the first direction than the first connecting portions.

16. The battery cell according to any one of claims 6 to 14, wherein the protrusions comprise the second portions, the second portions comprise the third bending portions and the second connecting portions, the third bending portions are connected to the inner circumferential surface of the ring body, the second connecting portions are connected to the third bending portions, and the second connecting portions are at least partially located on the side of the first surface deviating from the second surface.

17. The battery cell according to claim 16, wherein in the first direction, the second connecting portions and the first surface are arranged at an interval.

18. The battery cell according to claim 16 or 17, wherein the second connecting portions comprise:
a plurality of second lamination parts which are located at the side of the first surface deviating from the second surface and are arranged in the first direction; and
fourth bending portions which are connected to two adjacent second lamination parts.

19. The battery cell according to claim 18, wherein in the first direction, the every two adjacent second lamination portions are arranged at an interval.

20. The battery cell according to claim 18 or 19, wherein the second lamination portion farthest away from the first surface is connected to the corresponding third bending portion in the first direction; or, the second lamination portion closest to the first surface is connected to the corresponding third bending portion in the first direction.

21. The battery cell according to any one of claims 15 to 20, wherein the second portions are integrally bent and formed from a plate.

22. The battery cell according to any one of claims 6 to 21, wherein in the first direction, the minimum thickness of the ring body is D, and D≥0.3mm.

23. The battery cell according to any one of claims 6 to 22, wherein the spacer is electrically connected to the first wall portion and the first tab; and in the circumferential direction of the ring body, the sum of the maximum sizes of all protrusions is A₁, the sum of the maximum sizes of all second flow guide channels is A₂, 0.1≤A₁/(A₁+ A₂)≤0.8.

24. The battery cell according to any one of claims 1 to 23, wherein the spacer electrically connects the first wall portion with the electrode assembly.

25. The battery cell according to claim 24, comprising:
a first current collecting member which is arranged between the spacer and the first tab in the first direction, the first current collecting member electrically connecting the spacer with the first tab, and a protrusion of the first current collecting member covering the avoidance space in the first direction.

26. The battery cell according to claim 25, wherein the spacer and the first wall portion are welded to form the first weld mark area, the spacer and the first current collecting member are welded to form the second weld mark area, and the projection of the first weld mark area does not overlap with the projection of the second weld mark area in the first direction.

27. The battery cell according to claim 25, wherein the first tab is formed at the end of the electrode assembly close to the first wall portion in the first direction, and the material of the first tab is different from that of the first wall portion;
the material of the first current collecting member is the same as that of the first tab, and the first current collecting member is connected to the first tab by welding; the material of the spacer is the same as that of the first wall portion, and the spacer is connected to the first wall portion by welding; and the first current collecting member is in composite connection with the spacer.

28. The battery cell according to any one of claims 25 to 27, wherein the electrode assembly is provided with a first central hole, the first current collecting member is provided with a second central hole, and the second central hole communicates the first central hole with avoidance space.

29. The battery cell according to any one of claims 1 to 28, wherein the first wall portion comprises a wall body and an abutting portion, the wall body is provided with the pressure relief mechanism, and the abutting portion is arranged around an outer edge of the wall body; and
in the first direction, the abutting portion protrudes from the wall body in a direction close to the electrode assembly and directly or indirectly abuts against the spacer.

30. The battery cell according to claim 29, wherein the shell comprises a side wall which is separated from the first wall portion, the side wall is arranged around the first wall portion, and the first wall portion is arranged at an end of the side wall in the first direction; and
at least portion of the abutting portion is accommodated in the side wall and is in positioning fit with the side wall.

31. The battery cell according to any one of claims 1 to 30, wherein the pressure relief mechanism and the first wall portion are integrally formed; or, the pressure relief mechanism and the first wall portion are arranged in a separated mode, and the pressure relief mechanism is mounted on the first wall portion.

32. The battery cell according to any one of claims 1 to 31, wherein the shell comprises:
a case having an opening formed in at least one end in the first direction; and
end covers for sealing the opening; and
at least one end cover serves as the first wall portion.

33. The battery cell according to any one of claims 1 to 32, wherein the battery cell is a cylindrical battery cell.

34. A battery, comprising the battery cell according to any one of claims 1 to 33.

35. An electrical device, comprising the battery cell according to any one of claims 1 to 33, wherein the battery cell is configured to provide electric energy for the electrical device.
